# EUROPEAN PATENT SPECIFICATION

(11) **EP 1 719 012 B1**
(45) Date of publication and mention of the grant of the patent: **28.03.2012**
(21) Application number: 05722864.5
(22) Date of filing: 09.02.2005
(51) Int. Cl.: B81C 1/00, G02B 26/08, H01L 21/78, B81B 3/00

(54) **MEMS SCANNING SYSTEM WITH IMPROVED PERFORMANCE**
MEMS-SCAN-SYSTEM MIT VERBESSERTER LEISTUNGSFÄHIGKEIT
SYSTEME DE BALAYAGE A TECHNOLOGIE MEMS OFFRANT DES PERFORMANCES AMELIOREES

(30) Priority: 09.02.2004 US 542896 P; 14.05.2004 US 571133 P
(43) Date of publication of application: 08.11.2006
(73) Proprietor: Microvision, Inc., Redmond, WA 98052-5034 (US)
(72) Inventor: SPRAGUE, Randall, B., Carnation, WA 98014-9715 (US); YAN, Jun, Cincinnati, OH 45204 (US); TAUSCHER, Jason, B., Sammamish, WA 98074 (US); DAVIS, Wyatt, O., Bothell, WA 98021-3527 (US); LEWIS, John, R., Bellevue, WA 98008 (US); BROWN, Dean, R., Lynnwood, WA 98037-4940 (US); MONTAGUE, Thomas, W., Mercer Island, WA 98040 (US); BROWN, Chancellor, W., Everett, WA 98204 (US)
(74) Representative: Dendorfer, Claus
(86) International application number: PCT/US2005/004071
(87) International publication number: WO 2005/078509

(56) References cited:
- EP-A- 0 620 415
- EP-A- 1 197 779
- WO-A-01/46741
- US-A- 5 969 465
- US-A1- 2001 052 834
- US-A1- 2002 125 325
- US-A1- 2002 149 294
- US-A1- 2003 032 215
- US-A1- 2003 137 711
- US-A1- 2004 007 069
- US-B1- 6 392 220
- US-B1- 6 672 732
- SCHENK H ET AL: "A resonantly excited 2D-micro-scanning-mirror with large deflection" SENSORS AND ACTUATORS A, ELSEVIER SEQUOIA S.A., LAUSANNE, CH, vol. 89, no. 1-2, 20 March 2001 (2001-03-20), pages 104-111, XP004317252 ISSN: 0924-4247

## Description

### FIELD OF THE INVENTION

The present invention relates to MEMS devices and scanners, and scanned beam systems that use MEMS scanners.

### BACKGROUND OF THE INVENTION

MEMS (Micro electro mechanical system) devices may be used in many applications including rear and front projection scanned beam displays, scanned beam image capture devices, optical gyroscopes, accelerometers, and other applications. In addition to displays that project an image onto a conventional opaque or translucent viewing screen, scanned beam displays can include retinal scanning displays (RSDs) and heads-up displays (HUDs). Scanned beam image capture applications include one-dimensional (1D) or linear scanning devices such as linear bar code scanners and two-dimensional (2D) image capture devices such as 2D bar code or omnidirectional linear bar code imagers, 2D bar code scanners, confocal microscopes, microprobes, medical imaging systems, and others.

For cases where the MEMS device is used to scan a beam of light, it is frequently called a MEMS scanner or beam deflector. MEMS scanners may operate resonantly or non-resonantly, and may scan in one or a plurality of axes.

MEMS devices may carry light emitters directly or alternatively may deflect a beam through a scan angle. In beam deflection applications, one or more scan plates have a reflective surface that is used to scan an impinging beam over a field of view. The reflective surface may include a plated reflective metal such as gold or aluminum, a dielectric stack, bare silicon, or other materials depending upon wavelength and other application issues.

2D scanning may be achieved by arranging a pair of 1D scanners with their axes of rotation at substantially right angles to one another. Alternatively, 2D scanners may use a single mirror that is driven to rotate around both scanning axes. When a single mirror is used to scan in two axes, a gimbal ring may be used to allow appropriate rotation. Frequently, 2D scanners include an inner scan plate carrying a mirror that performs a fast scan with an outer gimbal ring performing a slow scan. Conventionally, the fast scan sweeps back and forth horizontally across the field of view (FOV) while the slow scan indexes down the FOV by one or two lines. Such systems may be termed progressive scan systems. In such systems the fast scan operates at a relatively high scan rate while the slow scan operates at a scan rate equal to the video frame rate. In some applications, the fast scan operates resonantly while the slow scan provides a substantially sawtooth pattern, scanning progressively down the frame for a (large) portion of the frame time and then flying back to the top of the frame to start over. In other applications, interleaved sawtooth scanning, triangular wave scanning, sinusoidal scanning and other waveforms are used to drive one or both axes.

Although this document frequently refers to a fast scan direction as horizontal (rotating about a vertical scan axis) and a slow scan direction as vertical (rotating about a horizontal scan axis), it must be realized that such a convention is not limiting. The teaching applies similarly to systems with fast and slow scans in the vertical and horizontal directions, respectively, as well as other directions.

In progressive scan systems, the beam may be scanned unidirectionally or bidirectionally depending upon the desired resolution, frame rate, and scanner capabilities. Bi-directionally scanned systems may suffer from raster pinch as described by Gerhard et al in U.S. Patent number 6,140,979 entitled Scanned Display with Pinch, Timing, and Distortion Correction. One approach to compensating for raster pinch is to add a correction mirror that corrects the beam path to more nearly approximate an ideal raster pattern.

More recently, work by the applicant has focused on alternative scan patterns that scan the beam in a Lissajous scan pattern over the FOV. Lissajous scan patterns have an advantage in being able to operate the MEMS scanner resonantly in both axes, thus reducing power consumption. Such systems may also have reduced torque requirements and may thus be made smaller and have other advantages.

Various actuation technologies for MEMS scanners have been disclosed. Electrocapacitive drive scanners include both rear drive pad and comb drive architectures. Magnetic drive scanners include moving coil and moving magnet types. Other technologies include thermal, piezoelectric, and impact motor drives. Rotation may be constrained by torsion arms, bending flexures and other arrangements. Electrocapacitive drive systems are sometimes referred to as electrostatic in the literature. Bending flexures are popularly referred to as cantilever arms.

Frequently, two or more drive schemes are combined to provide independent drive in two or more axes. For example, the Gerhard et al patent listed above shows a MEMS scanner with a fast scan axis that is powered electrocapacitively and a slow scan axis that is powered magnetically. The need to provide independent drive actuators for each axis has heretofore limited size reductions as well as the number of axes.

Another aspect of MEMS oscillator requirements frequently includes the need to monitor device motion or angle. Various schemas have been proposed and used including piezo-resistive and optical feedback.

US 2002/0149294 A1 discloses a micromachined flat spring structure having a moving plate, a moving inner frame surrounding the moving plate, a pair of first torsion bars coupling the moving plate and the moving inner frame to each other, a fixed outer frame surrounding the moving inner frame, and a pair of second torsion bars coupling the moving inner frame and fixed outer frame to each other. The first torsion bars are chiefly constituted by monocrystalline silicon which has a relatively high stiffness, while the second torsion bars are chiefly constituted by polyimide which has a relatively low stiffness. Consequently, the resonance frequency fᵣ₁ of the first torsion bars is relatively high, and the resonance frequency fᵣ₂ of the second torsion bars is relatively low.

A driving coil is arranged on the moving inner frame. Alternating current is supplied to the driving coil to cause vibration of the moving plate at a frequency corresponding to the resonance frequency fᵣ₁ of the first torsion bars, and to cause vibration of the moving inner frame at a frequency corresponding to the resonance frequency fᵣ₂ of the second torsion bars.

US 2004/0007069 A1 discloses a dual axis resonant MEMS device with a functional surface that is held in a gimbals portion via two inner hinges. The gimbals portion is in turn connected to a supporting frame via two outer torsional hinges. An alternating drive voltage having a frequency which is approximately the resonance frequency of the functional surface is applied between electrostatic drive plates and the supporting frame to generate vibrations. The energy of the vibrations is inertially coupled through the outer torsional hinges, the gimbals portion and the inner hinges to the functional surface.

An additional orthogonal motion of the gimbals portion is controlled by electromagnetic coils. Permanent magnets that are bonded to the gimbals portion interact with the magnetic field of the electromagnetic coils to provide the orthogonal motion.

US 2001/0052834 A1 discloses an electromagnetic actuator with an external movable plate formed integrally with a semiconductor substrate and movably supported with respect to the semiconductor substrate by a first torsion bar. An internal movable plate is disposed inside the external movable plate and rotatably supported with respect to the external movable plate by a second torsion bar. A single turn first driving coil extending around the external movable plate and a single turn second driving coil extending around the internal movable plate are connected in series so that both driving coils are driven by the same current flow. Utilizing the difference between the resonant frequencies of the external movable plate driven by the first driving coil and the internal movable plate driven by the second driving coil, the external and internal movable plates are separately driven so as to allow an optical element on the internal movable plate to swing about two orthogonal axes.

### OVERVIEW

The present invention is defined by the independent claims. The dependent claims concern optional features of some embodiments of the invention.

According to aspects of the present invention, a superior actuator design may be applied to MEMS devices. Additionally, according to other aspects, structures, functionality, performance and cost may be improved.

According to one aspect, a plurality of actuator mechanisms may be coupled in series or in parallel. Each actuator mechanism may be paired with an oscillator component having a characteristic resonance frequency and amplification factor. A single composite signal containing drive signals for each of the actuator mechanisms is used to actuate the actuators. The actuator responds to one or more specific drive signal components based on the resonance frequency and amplification factor characteristics of its paired oscillator component.

According to some aspects, the plurality of actuator mechanisms may be electrically coupled through wires. In other embodiments, the plurality of actuator mechanisms may be coupled wirelessly through, for example, an electromagnetic or acoustic interface. Electromagnetic interfaces may include RF, microwave, infrared light, visible light, ultraviolet light, or other forms of radiation.

According to other aspects, various stationary magnet designs may be used to improve coupling of a moving coil scan plate to the magnetic field. The stationary magnets may be permanent magnets or electromagnets.

According to another aspect, a single axis magnetic field may be used to drive scanning in two or more non-parallel axes. The magnetic field may be oriented to be transverse to each of the axes. The angle of the magnetic field may be optimized according to the system requirements. Response variables include minimization of peak current, minimization of power consumption, maximization of torque in one or more of the axes, minimization of size of one or more of the drive coils, minimization of response time to a signal input, matching of oscillation amplitudes, selection of phase relationships between frequency components of the drive signal, and matching of resonant and non-resonant drive schemas.

According to another aspect, 2D scanning may be realized using a structure having one or more flexures that allow rotation in two or more axes to eliminate the gimbal ring.

According to another aspect, a sensing coil may be used to determine component position and movement. The sensing coil may be formed using no additional mask layers by forming crossovers and crossunders in the coil layers. The sensing coil is made continuous by using a crossunder in the actuator coil conductor layer. The actuator coil is made continuous by using a crossover in the sensing coil conductor layer. A dielectric layer separates the conductor layers.

According to another aspect, portions of the MEMS scanner are mechanically coupled to be driven in sympathetic resonance. In this document, the term *sympathetic resonance* is to be understood to refer to the phenomenon whereby slight movement by one element of a MEMS system is mechanically communicated to a second element of the system, the second element being thus driven to relatively greater amplitude movement by virtue of its resonant behavior. Such movement may be driven on-resonance or off-resonance, as will be explained herein. Vibrations in one portion of the scanner get transmitted and amplified by the resonance and amplification factor of a second portion of the scanner. The motion of first portion of the scanner receives negligible input from the portion of the signal intended for the second portion of the scanner. The second portion of the scanner may be driven to substantial amplitude in sympathetic oscillation.

According to another aspect, attaching the surface to flexures through a suspension may minimize deformation of an active surface. In some embodiments, MEMS scan plates or portions thereof are driven to rotate through torsion arms. The torsion arms undergo significant strain. Spreading the torsional load over a torque distribution member termed a suspension reduces strain in the active surface. The active surface may comprise a mirror, one or more emitters, or other features that benefit from maintaining a predetermined shape.

According to another aspect, a MEMS scanner may be driven entirely sympathetically with little motion of the actuator in the axis of oscillation of the actuator. One or more actuators may be affixed to stationary surfaces. Periodic impulses of the actuator are mechanically transmitted across the MEMS structure. Portions of the MEMS device are thus driven to oscillate to a desired amplitude via mechanical coupling through the device.

The terms *oscillator* and *scan plate* are used herein somewhat interchangeably. Either term generally refers to a structure of a MEMS device that may be driven through a periodic motion. A scan plate may be driven with a sinusoidal periodicity that may be referred to as oscillation. In addition, structures such as gimbal rings that impart freedom of motion in a plurality of axes, combined with the additional structures suspended therefrom, may be thought of as oscillating assemblies. In other embodiments according to the invention, structures such as gimbal rings and scan plates may be driven in motions that are not simply sinusoidal, but rather contain higher order sinusoidal components that cooperate to confer motion approximating a sawtooth, square, triangular, or other waveform.

According to another aspect, drive signals for various dimensions of movement by a MEMS device are combined into a single composite drive signal having a plurality of frequency components. The composite drive signal is transmitted to the MEMS device via a single pair of drive leads. The MEMS device is designed such that each dimension of movement responds to one or more intended frequency components according to its resonant frequency and amplification factor, while minimizing response to other frequency components.

According to another aspect, two or more sinusoidal signals are combined in a drive circuit and transmitted to a MEMS device as a single drive signal.

According to another aspect, one or more resonant signals are combined with a non-resonant signal such as an approximately sawtooth waveform, for example. For such an embodiment, a non-resonant member may be directly driven while one or more resonant drive signals are propagated through the structure. To prevent the non-resonant signal from exciting the resonant body, frequency components near the resonant frequency of the resonant body are eliminated from the non-resonant signal. This may be conveniently accomplished, for example, by including only lower order harmonics in the non-resonant signal.

According to another aspect, a MEMS drive signal generator includes provision for generating and combining a plurality of frequency components.

According to another embodiment, a moving magnet MEMS actuator includes a magnet mounted on suspension elements. The suspension elements spread the torque load across the active surface of the device and thus limit distortion.

According to another aspect, a moving magnet MEMS actuator may include a moving system having antiparallel magnetic fields. A single electromagnet may induce rotation about one or more axes by simultaneously attracting one field while repelling the other.

According to another aspect, an improved MEMS scanner may be used in a scanned beam imager.

According to another aspect, an improved MEMS scanner may be used in a scanned beam display.

According to another aspect, an improved MEMS scanner may be used to produce a corrected scan path. The scanner may include three or more degrees of freedom, each of which responds to a drive signal according to its resonant frequency and amplification factor. Thus, it is practical to drive three or more scan axes (some of which may be substantially parallel) without the complication of providing three sets of drive leads and three actuators. The drive signals are propagated through the scanner using the off-resonance response of intermediate structures.

According to another aspect, a microelectromechanical system (MEMS) beam scanner is disclosed that attains high performance. In particular, various embodiments are operable with a relatively large ΘD product at relatively high scan frequency, all while maintaining sufficient mirror flatness to meet system requirements.

Another aspect relates a MEMS beam scanner having performance and properties that make it amenable for use in applications that have heretofore been the domain of rotating polygon scanners. The use of such an approach can result in reduced mass and size, faster start-up, reduced noise, higher reliability, and other advantages compared to rotating polygon mirrors.

According to an aspect of the invention, a MEMS beam scanner may be formed with physical and operational attributes; including mirror size, scan angle, scan frequency, and mirror flatness; to be especially well-adapted to replace a rotating polygon mirror in a range of applications. For some applications, a MEMS mirror with extended length transverse the scanning axis can be substituted for a rotating polygon without substantial modifications to existing optical designs.

According to another aspect, a MEMS scanner is formed having torsion arm geometry adaptable to a large scan angle. The torsion arms may be several times longer than the longitudinal dimension of the mirror surface.

According to another aspect, leverage members are formed on the distal end of the torsion arms (away from the scan mirror). The leverage members serve to reduce stress concentrations, enlarge the scan angle, provide connection to laterally-displaced mounting pads, and create a moment arm for driving the scanner from an off-chip actuator.

According to another aspect of the invention, a MEMS scanner is mounted to an actuator assembly using a clamping pressure that holds mounting pads in substantially continuous contact with a linear actuator. When the linear actuator is a piezo-electric actuator stack, for example, this positive pressure maintains compressive force or minimizes tension forces in the piezo-electric actuator stack, thereby improving reliability, robustness, and/or life.

According to another aspect, a heater varies the spring constant of a MEMS torsion arm, thus modifying the resonant frequency of a scanning mirror supported therefrom. The fineness of resonance frequency control thus achieved allows operation of the MEMS scanner close to its resonant frequency. Heating may be accomplished by joule heating of the bulk semiconductive material, such as silicon, within at least portions of the MEMS scanner itself. A doping process optionally creates a charge carrier channel having a graded resistivity vs. depth. Metal layers may be applied to regions of the MEMS scanner to reduce subjacent joule heating within such regions.

According to another aspect, a MEMS scanner may be formed having no outer frame, such as a photolithographically-formed frame. Instead, a plurality of mounting pads may be formed.

According to another aspect, a number of MEMS scanners are formed on a silicon wafer having a plurality of mounting pads. The irregularly shaped devices are formed on a silicon wafer in an interlaced manner with mounting pads overlapping, e.g. intruding into the area of neighboring dies that would heretofore have been occupied by a frame. Devices are almost released from the silicon wafer using a deep etching process such as deep reactive ion etch (DRIE). One or more "lands" or "bridges" maintain connection between the part and the wafer or between adjacent parts to mechanically stabilize the wafer. The bridges are subsequently broken to remove the parts.

According to another aspect, a scanner controller includes provision for maintaining a scanner resonant frequency that matches a system operational frequency. In an exemplary embodiment, this is implemented as a phase difference driven servo control loop.

According to another aspect, a scanner controller includes a heater amplifier for applying a current to a scanner heater.

According to another aspect, a MEMS scanner controller includes a phase servo control loop to lock a scanner phase to a system phase.

According to another aspect, a scanner controller includes one or more servo loops that operate in a pseudo-locked state during a system idle process, thus allowing faster start-up.

According to another aspect, a MEMS scanner controller applies a drive voltage during start-up that is significantly higher than the drive voltage used during operation. The high drive voltage is useful for achieving faster start-up.

Other aspects will become apparent to the reader through reference to the appended brief description of the drawings, detailed description, claims, and figures, to be limited only according to the claims.

### BRIEF DESCRIPTION OF THE DRAWINGS

Figure 1 is a top view of a magnetic drive MEMS scanner having two scanning axes driven by moving coils wired in series.
Figure 2A is a sectional view of the MEMS scanner of Figure 1 showing magnets for generating a magnetic field.
Figure 2B is a sectional view of the MEMS scanner of Figure 1 showing another embodiment of magnets.
Figure 2C is a sectional view of the MEMS scanner of Figure 1 showing another embodiment of magnets.
Figure 2D is a sectional view of the MEMS scanner of Figure 1 showing another embodiment of magnets.
Figure 2E is a sectional view of the MEMS scanner of Figure 1 showing another embodiment of magnets.
Figure 3A is a view of a magnetic drive MEMS scanner having two scanning axes driven by a single moving coil and having a single pair of biaxially compliant support arms.
Figure 3B is a detailed view of the drive coil and sense coil pass over and passunder of Figure 3A.
Figure 3C is a detailed view of the outer drive coil and sense coil leads of Figure 3A.
Figure 4A is a view of a magnetic drive MEMS scanner having two scanning axes driven by a single moving coil on the gimbal ring.
Figure 4B is a side view of a MEMS scanner illustrating dynamic deformation of a self-supported (non-suspended) scan plate.
Figure 4C is a side view of a MEMS scanner showing reduced dynamic deformation in the scan plate achieved by using a suspension.
Figure 5 is a view of a single axis MEMS scanner driven through sympathetic resonance from a piezoelectric actuator.
Figure 6 shows individual and multiplexed waveforms for driving a two-axis MEMS scanner.
Figure 7A is a block diagram of a driving circuit for driving a single or series actuator to induce movement in two axes.
Figure 7B is a block diagram of a MEMS controller that includes provision for position feedback.
Figure 8 is a view of a single axis moving magnet scanner.
Figure 9 is a view of a two-axis moving magnet scanner having opposed fixed magnetic fields.
Figure 10 is a block diagram of a scanned beam imager with a MEMS scanner.
Figure 11 is a diagram of a scanned beam display.
Figure 12A is a diagram of information presented to the user of the scanned beam display of Figure 11 when used in a see-through mode.
Figure 12B is a diagram of information presented to the user of the scanned beam display of Figure 11 when used in an occluded mode.
Figure 13 is a beam position diagram showing the path followed by the scanned beam in response to a ramped vertical scan exemplified by individual waveforms 602 and 608 and combined waveform 610 of Figure 6.
Figure 14 is a Lissajous scan pattern that may be created by a correction mirror resonating at twice the frequency of a fast scan mirror.
Figure 15 is a beam position diagram showing a corrected scan path formed by superimposing the pattern of Figure 14 over a linear vertical scan.
Figure 16 is a response curve of a simple resonant body.
Figure 17 shows response curves for two modes of a resonant body.
Figure 18 shows response curves for coupled modes between two resonant bodies. The resonant frequencies are widely separated and there is minimal perturbation of the curve shapes.
Figure 19 is a mechanical model for a MEMS device having two oscillatory masses.
Figure 20 shows response curves for coupled modes between two resonant bodies. The resonant frequencies are relatively similar and the curves induce perturbations in one another.
Figure 21 is a plot of response curves for coupled modes between two resonant bodies of a real MEMS device. The resonant bodies have resonant frequencies that are relatively close together and the bodies induce perturbations in the response of one another.
Figure 22A is a top view of a MEMS scanner made according to one embodiment.
Figure 22B is a top view of a MEMS scanner made according to another embodiment.
Figure 23 is a perspective view of a MEMS scanner made according to another embodiment.
Figure 24 is a graph illustrating the dynamic response of the MEMS scanner of Figure 23.
Figure 25A is a view of a number of MEMS devices showing how they are arrayed on a silicon wafer during manufacture.
Figure 25B illustrates an alternative layout of MEMS devices on a wafer.
Figure 26 is a view of a MEMS mounting clamp.
Figure 27 is a detailed view of a piezo-electric stack used to form the actuator of Figures 5 and 26.
Figure 28 is a front perspective view of a MEMS scanner package for use in a beam scanning subsystem.
Figure 29 includes two additional perspective views of the MEMS scanner package of Figure 28.
Figure 30 is a block diagram of a control system for driving a MEMS scanner.
Figure 31 is a flow chart showing a start-up method for driving a MEMS scanner.

### DETAILED DESCRIPTION

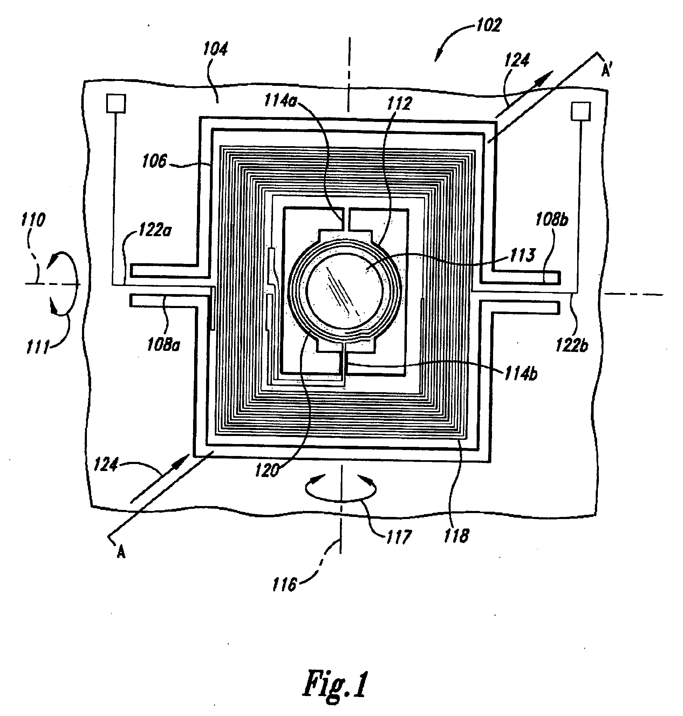

Figure 1 illustrates a MEMS scanner having a series actuator that carries drive signals for a plurality of axes. Mechanical motion for the various axes is determined by the matching of drive signal frequency components to the mechanical resonance of each axis.

MEMS scanner 102, here embodied as a beam scanner or beam director, comprises various structures etched or formed in a silicon die. Outer support structure 104 acts as a frame to anchor the scanner to other mounting features (not shown) and includes pads (not shown) for receiving drive signals and traces for transmitting the drive signals to the actuator(s). Support structure 104 may further include traces and pads for providing drive current to sensors and transmitting position-sensing signals to a controller.

Outer support frame 104 supports gimbal 106 on torsion arms 108a and 108b. As is conventional, the terms "gimbal" and "gimbal ring" are used interchangeably herein. It should be understood that a variety of specific structures may act as a gimbal including open and closed-end rings, and other non-ring type structures that allow controlled movement about selected axes. As can be seen, torsion arms 108a and 108b are of a type that extend into the frame 104 beyond its edge. To extend beyond the edge of frame 104, torsion arms 108a and 108b are separated along their sides from the frame by etched trenches.

Torsion arms 108a and 108b allow gimbal ring 106 to rotate about axis 110 as indicated by arrow 111. Suspended within gimbal 106 is oscillator or scan plate 112, which may for example take the form of a plate that has a mirror 113 formed thereon. In the description herein, the terms "oscillator" and "scan plate" may be used interchangeably for many purposes. Torsion arms 114a and 114b couple scan plate 112 to gimbal ring 106, and allow the scan plate to rotate about axis 116 as indicated by arrow 117. As is apparent, axis 116 is fixed relative to the gimbal ring 106 and rotates along with the gimbal ring relative to support frame 104

As an alternative or in addition to mirror 113, scan plate 112 may have one or more electromagnetic energy sources formed thereon, the movement produced by scan plate 112 thus directly scanning one or more beams of electromagnetic energy. Such electromagnetic energy sources may emit any or several of a broad range of wavelengths including gamma, x-ray, ultraviolet, visible, infrared, microwave, or radio. For ultraviolet, visible, and infrared emissions, the electromagnetic energy source (now termed a light source) may include one or more laser diode light sources, such as conventional edge-emitting or vertical cavity emitting lasers for example, one or more LEDs, one or more fluorescent sources, or other types of emitters.

The mass and distribution of mass within scan plate 112 and the stiffness of torsion arms 114a and 114b determine a resonant frequency and amplification factor for the rotation of scan plate 112 about axis 116. Similarly, the combined mass of the assembly comprising gimbal ring 106, torsion arms 114a and 114b, and scan plate 112 (and their mass distribution); and the stiffness of torsion arms 108a and 108b determine a resonant frequency and mechanical amplification factor (also called simply "amplification factor") for the rotation of the scan plate and gimbal assembly about axis 110. In general, the designer has wide latitude in choosing a resonant frequency and amplification factor for each of the two axes. For a two-axis (and by analogy, multi-axis) MEMS scanner 102, the resonant frequency of scan plate 112 rotation about axis 116 may be selected to be significantly higher than the resonant frequency for the assembly's rotation about axis 110.

Actuator 118, embodied as a coil in the example of Figure 1, may be driven to produce rotation of gimbal ring 106 and suspended scan plate 112 about axis 110. Similarly, actuator 120, also embodied as a coil, may be driven to produce rotation of scan plate 112 about axis 116. Coils 118 and 120 will act as actuators when MEMS scanner 102 is held in a magnetic field, such as that indicated as 124, that is transverse to both axes 110 and 116. When coil 120 receives a signal that is periodically driven at a rate corresponding to the resonance frequency (or any frequency that produces a suitable response) of scan plate 112, the amplitude of the rotation of scan plate 112 will be increased proportionally to its amplification factor. In a similar manner, when coil 118 receives a signal that is periodically driven at a rate corresponding to the resonance frequency of the assembly comprising scan plate 112, torsion arms 114a and 114b, and gimbal ring 106; the assembly will oscillate about axis 110 with enhanced amplitude owing to the mechanical amplification factor. By analogy, each resonance frequency acts as a receiver tuned to receive a respective signal.

In alternative embodiments it may be preferable to provide a drive signal corresponding to one or more harmonics of a MEMS member. Additionally, more complex waveforms may be used to achieve a desired velocity profile as the MEMS member sweeps through its range.

In the MEMS scanner 102 of Figure 1, coils 118 and 120 are wired in series. Alternatively, coils 118 and 120 could be wired in parallel. In either event, according to one embodiment, each coil responds to drive its respective element according to the resonance characteristics of its associated member. Thus a single signal to drive both axes is fed to the coils via leads 122a and 122b. When the single signal contains frequency components equal to each of the resonant frequencies of the system, each of the gimbal 106 and scan plate 112 will respond preferentially to their individual characteristic resonant frequencies. In some systems, the actuators may respond with a characteristic 6 dB per octave roll-off or higher. Thus, with sufficient resonant frequency separation between the axes, each axis of rotation will substantially be driven only at its resonant frequency.

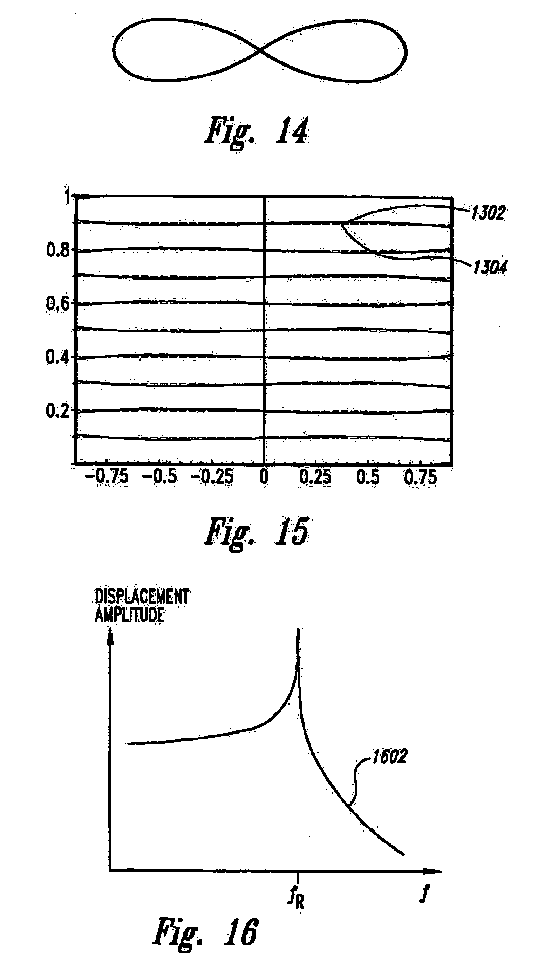

In still other embodiments according to the invention, a scan plate, gimbal ring, etc. may be driven off-resonance. As will be explained in more detail with respect to Figures 16-20, a suitable amount of movement in a member may be induced over a broad range of frequencies. Thus, the term resonance, as used herein, is a shorthand way of referring to a resonant response that occurs over a range of frequencies, typically peaking at a single resonance frequency.

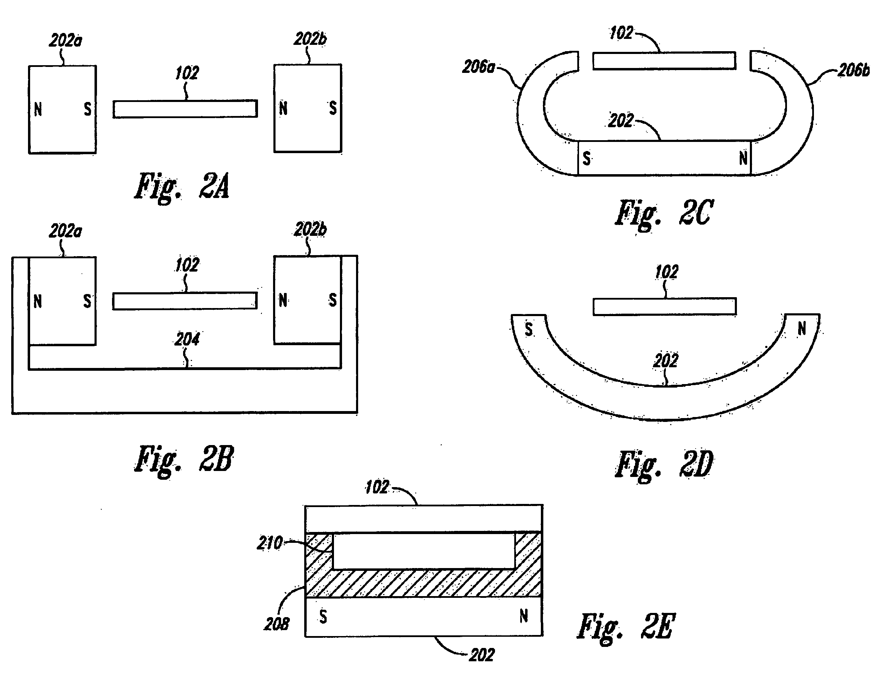

The actuators of Figure 1 operate to generate a variable magnetic field. They are suspended in a magnetic field that is transverse to each of the rotation axes 110 and 116. The example of Figure 1 shows the transverse B field substantially in the nominal plane of the device. A magnetic B field, whose axis is indicated by arrows 124, may be generated using various arrangements of electromagnets or permanent magnets. Figures 2A through 2E illustrate some of the possible arrangements of magnets, each illustrated as a sectional view taken along section A-A' of Figure 1. The orientation of the B field, as indicated by the direction of arrows 124, may be varied to achieve desirable operating characteristics, such as setting the desired response to various drive signals, or to suppress undesirable characteristics such as minimizing response in an undesirable axis or mode.

In Figure 2A, magnets 202a and 202b are oriented with opposing magnetic poles facing one another across MEMS die 102. In Figure 2B, the far poles of magnets 202a and 202b are joined by a keeper 204. The keeper 204 is optimally constructed of a high magnetic permeability, high saturation material such as steel, for example. A high permeability, high saturation keeper can help to concentrate the magnetic field between the facing poles of magnets 202a and 202b by reducing the fringing field around each magnet to its opposite face. In figure 2C, the magnetic field is generated by a single magnet 202. The magnetic field is concentrated across MEMS die 102 by opposing pole pieces 206a and 206b. Pole pieces 206a and 206b are again optimally formed of a high magnetic permeability, high saturation material such as steel. Figure 2D illustrates use of a single magnet 202 that directs a fringing field across MEMS die 102. Figure 2E illustrates a single magnet formed on the back of a MEMS assembly. MEMS die 102 is joined to a spacer 208, forming a cavity 210 that allows for rotation of rotating parts out of plane. Magnet 202 is formed on the back of spacer 208. Spacer 208 may be formed of several materials including ferromagnetic materials such as steel and non-ferromagnetic materials such as silicon or glass.

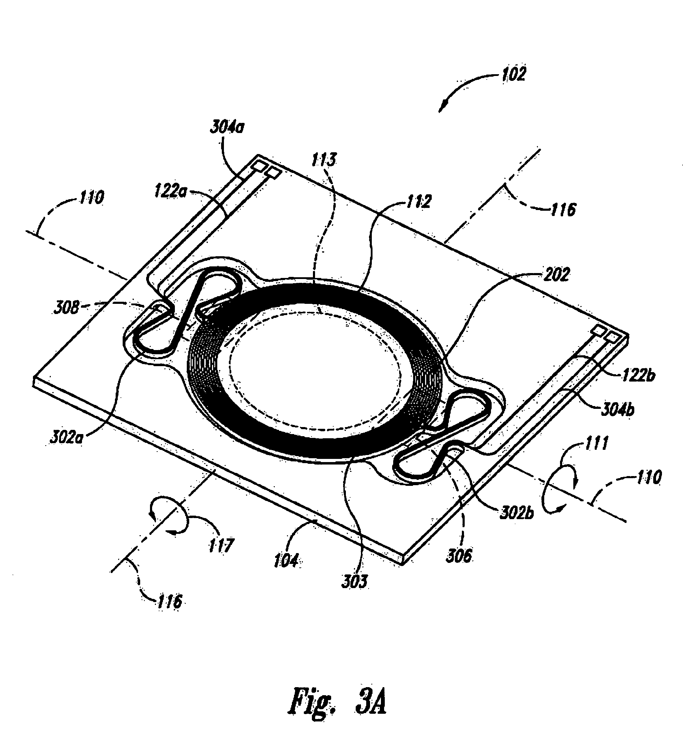

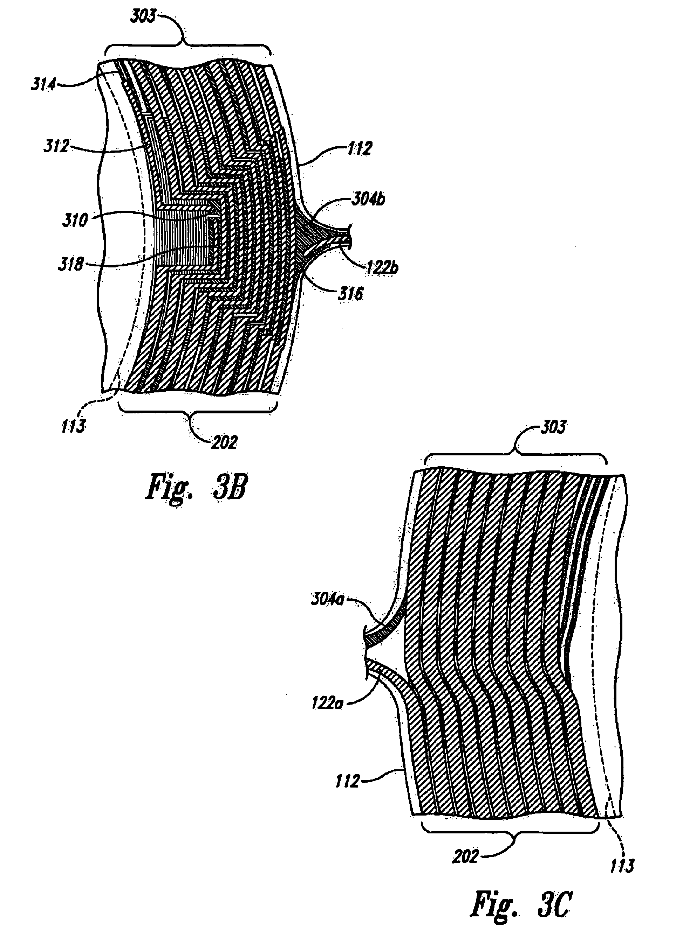

Figure 3A illustrates an alternative embodiment of a MEMS scanner 102 having two rotation axes 110 and 116. In the MEMS scanner of Figure 3, a single pair of biaxially compliant support arms 302a and 302b support scan plate 112 and replace the separate pairs of torsion arms 108a,b and 114a,b. The need for a separate gimbal ring 106 is thus eliminated.

The resonant frequency and amplification factor of scan plate 112 may be selected independently in each of the axes 110 and 116 by distributing its mass differently about each of the axes and by designing the support arms 302a and 302b to have different torsional stiffness in each axis. For the example of Figure 3, scan plate 112 may have a relatively high resonant frequency for rotation about axis 116 and a somewhat lower resonant frequency for rotation about axis 110.

Mirror 113 is shown as a dotted line because for the particular embodiment of Figure 3A, bare silicon is used as the reflective surface. Thus there is no mirror edge per se, but rather a mirror region that is defined by the extent of a beam impinging upon the silicon surface. This defined edge may vary depending upon particular beam alignment, shape, and size and depending upon the instantaneous angle of mirror 113 relative to the beam. The effective mirror surface becomes more circular for those instances when the mirror rotates toward the beam forming a more normal angle, and becomes more elliptical when the mirror rotates away from the beam.

Scan plate 112 includes a single drive coil 202 positioned peripherally around a mirror 113. The drive coil 202 is energized by leads 122a and 122b. Although leads 122a and 122b are shown carried on different support arms, they may alternatively be carried on a single arm. Leads 122a and 122b may be connected to a drive signal having a plurality of frequency components. Drive coil 202 then receives each of the frequency components. When drive coil 202 receives a frequency component equal to the resonant frequency for rotation around axis 110, it drives scan plate 112 to rotate about axis 110 at its resonant frequency. Similarly, when drive coil 202 receives a frequency component equal to the resonant frequency of axis 116, it drives scan plate 112 to oscillate about axis 116 at its resonant frequency. Thus scan plate 112 may be driven substantially independently to rotate about two axes at different frequencies.

For the particular embodiment of Figure 3A, the resonant (horizontal) scan frequency around axis 116 is 2.6 KHz. The resonant (vertical) scan frequency around axis 110 is 0.8 kHz. The respective horizontal and vertical scan angles are 9.4° and 0.85°. There may be a small amount of crosstalk between the vertical and horizontal scan. For example, for respective amplification factors of 500 to 1500, the vertical drive may couple into the horizontal drive, resulting in a horizontal pixel offset of approximately 3 pixels top-to-bottom. Varying the pixel clock, remapping the image, etc. may accommodate this where desired. Similarly, the horizontal drive may couple into the vertical drive resulting into a vertical pixel offset of approximately 0.7 pixel. This may be accommodated by maintaining flexure symmetry, producing an asymmetry to counteract the offset, or by image remapping, for example. As noted below, introducing a correction mirror may further compensate vertical motion. The correction mirror may be designed to accommodate horizontal-to-vertical drive coupling as well as raster pinch.

The MEMS scanner of Figure 3A further includes a sense coil 303 upon which drive coil 202 is partially superimposed. The sense coil is connected to leads 304a and 304b. The sense coil is formed over or beneath drive coil 202, as shown in Figures 3B and 3C, from a first metal layer separated from the second metal layer of the drive coil by a dielectric layer. The first metal layer additionally forms a pass-under for the second metal layer and the second metal layer forms a pass-over for the first metal layer. The sense coil undergoes induced current flow caused by its movement through the magnetic field. The current or voltage may be sensed and the velocity or position of the scan plate and mirror determined therefrom.

Referring to detail sections 306 and 308 for the particular embodiment shown in Figures 3B and 3C, respectively, metal layer 1, indicated by the darker traces, is comprised of deposited metal consisting of 1000 angstrom TiW, 2400 ang Gold, 200Ang TiW on 300 micron thick silicon, shown as the light gray region. The scan plate and support arm silicon is selectively backside etched to 80 micron thickness by timed deep reactive ion etching to reduce weight while forming reinforcing ribs to maintain stiffness. A dielectric layer (not shown) is formed over metal layer 1. Metal 1 to Metal 2 connections are formed by leaving holes in the dielectric layer at appropriate locations. Metal layer 2, indicated by the lighter traces, is comprised of 10 micron thick gold. Metal layer 2 is plated over the dielectric layer.

The sense coil 303, which lies under drive coil 202 for much of its path, is formed in metal 1 (gold) and comprises 21-1/2 turns. The sense coil trace is approximately 12.5 microns wide with 10 micron spacing, yielding a coil resistance of 1.5 kilo-ohms. Sense coil enters scan plate 112 through trace 304b, which terminates in a passunder 310 as shown in Figure 3B. Metal 2 jumper 312 connects passunder 310 to the inner end 314 of sense coil 303. Sense coil spirals out in a counter-clockwise direction and exits scan plate 112 at trace 304a as shown in Figure 3C. The choice of a counterclockwise-out spiral is arbitrary and could be substituted by a clockwise-out spiral, resulting in a 180° difference in sensed phase.

The drive coil 202, which lies over sense coil 303 for much of its path, is formed in metal 2 and comprises 9-1/2 turns. The drive coil trace is approximately 28 microns wide with 10 micron spacing, yielding a coil resistance of 12 Ohms. The drive coil enters scan plate 112 through trace 122b as shown in Figure 3A. Trace 122b connects to metal 1 passunder 316, which connects to the inner end 318 of drive coil 202. The drive coil spirals out in a clockwise direction and exits scan plate 112 at trace 122a as shown in Figure 3C. As with the sense coil, the choice of a clockwise-out spiral is arbitrary.

In one particular embodiment, scan plate 112 is suspended in a magnetic field oriented 30° to the right of axis 116 with a field strength of 0.21 Tesla. Under these conditions, the sense coil produces a horizontal sense electro-motive force (EMF) of 80 mV peak and a vertical sense EMF of 2 mV peak when the scan plate is driven at its designed angles and frequencies. Other magnetic field angles may be used in some cases, depending upon the desired vector components of the magnetic field according to the application.

While the sense coil of the MEMS scanner of Figures 3A, 3B, and 3C could be used to sense motion in both axes, it may be desirable for some applications to add piezo-resistive, photodetector, or other sensors to sense motion.

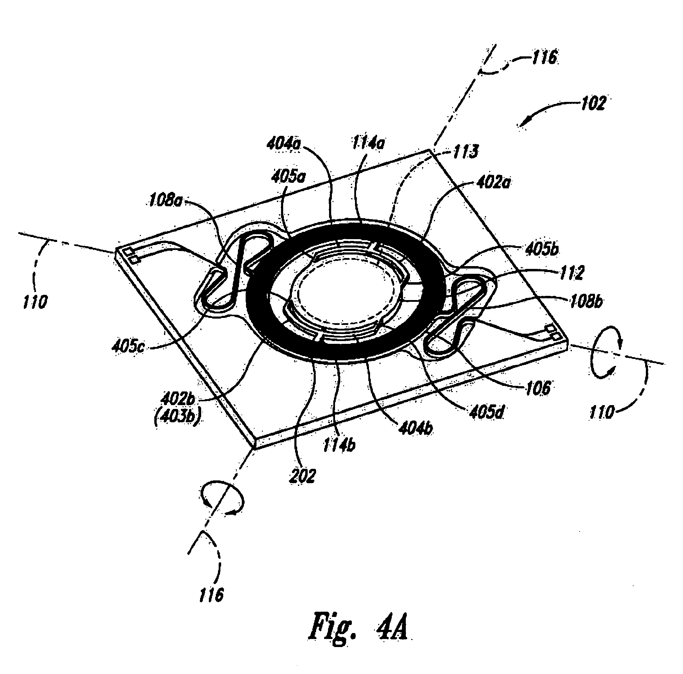

While Figure 1 illustrates the case of a pair of series-wired drive coils formed on both an inner scan plate and a gimbal ring and Figure 3A illustrates a single drive coil on an inner scan plate, Figure 4A illustrates the case of a single drive coil 202 on a gimbal ring 106 with an inner scan plate 112 being induced to "ring" through mechanical coupling across its torsion arms 114a and 114b. Drive coil 202 rotates the assembly comprising gimbal ring 106 and inner scan plate 112 about axis 110 directly. In this form, the drive signal for the resultant slow scan may be either resonant or may have another arbitrary shape. In some embodiments, the slow scan may be of a modified sawtooth form with progressive movement around the axis alternating with a rapid fly-back to the starting position. When the drive signal also includes a component modulated at the resonant frequency of the inner scan plate 112, the very slight mechanical response of the gimbal 106 gets transmitted across torsion arms 114a and 114b, through optional suspensions 402a and 402b, to scan plate 112. Owing to the resonant response of the inner scan plate, the transmitted movement amplified by the system and result in resonant rotation of the inner scan plate about fast scan axis 116. When a mirror 113 is formed on inner scan plate 112, the resultant rotational movements may be used to direct a beam of light across a two-dimensional field of view.

Axes 110 and 116 may be placed at arbitrary angles to one another. While the example of Figure 4A (and other examples below) are shown having "nested" scanning masses oriented at 90° to one another, other angles between 0° and 90° may be used. The inventors have discovered that drive impulses at the resonant frequency of inner scan plate 112 couple quite efficiently at various angles.

While gimbal support arms 108a and 108b are indicated as having a serpentine shape, straight, split, multiple and many other shapes of torsion arms may alternatively be used. The scanner of Figure 4A may include piezo-resistive sensors in some or all of its torsion arms to measure position.

The inner scan plate 112 of Figure 4A is illustrated supported by a suspension. The suspension transmits rotational torque between torsion arms 114a and 114b and suspended structure 112 while imposing a controlled dynamic deformation on the suspended structure. In some applications, and particularly some applications where the inner scan plate forms a base for a mirror 113, it is useful to impose a minimal amount of dynamic deformation on inner scan plate 112, thus keeping the mirror as flat as possible for minimum optical distortion.

In the particular embodiments represented by Figure 4A, the suspension 402a includes a suspension beam 403a connected to inner scan plate 112 at three locations. As indicated in the Figure, suspension 402a includes a suspension beam 403a, an axial connection 404a, and two lateral connections, 405a and 405b, through which torque is communicated with the inner scan plate 112. Similarly, suspension 402b includes a suspension beam 403b, an axial connection 404b and two lateral connections, 405c and 405d, through which torque is communicated with the inner scan plate 112. In the case of one particular embodiment of Figure 4A, axial connections 404a and 404b are respectively smaller in cross section than torsion arms 114a and 114b. This limits the amount of torque concentration at the point where axial connections 404a and 404b join inner scan plate 112 while also reducing lateral or pumping modes of motion.

While the particular arrangement illustrated by Figure 4A includes separate suspensions, each with three discrete connections to inner scan plate 112, a range of embodiments may be useful according to the application. For example, axial connections 404 could be increased in size or eliminated entirely. The number of discrete connections may be increased. Alternatively, the connections between the suspension beam and scan plate could be made continuous with compliance determined by the amount of thinning between the suspension beam and the inner scan plate. In continuous suspension connections, variable compliance may be created by forming grooves of variable width or variable spacing between the suspension beam and the inner scan plate. The number of discontinuous suspension elements may be increased above the two shown. Alternatively, a single suspension may form a continuous structure around inner scan plate 112. Alternatively, more than two discrete suspensions may be used, such as, for example, two suspension beams between each torsion arm and the scan plate. Additionally, suspensions may be formed between the gimbal ring 106 and outer torsion arms 108 a,b and/or in additional locations such as to multiple nested scan plates.

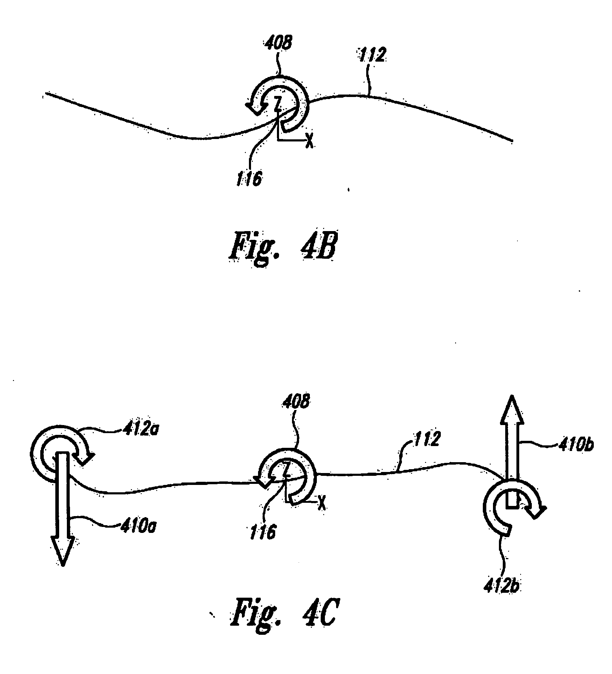

Figure 4B is a side view of dynamic deformation of a conventional MEMS scan plate driven by torque applied to the center of the scan plate. Scan plate 112 is shown at maximum deformation, the amount of deformation being exaggerated for ease of understanding. Torque 408 is applied in a counterclockwise direction as shown, primarily by the torsional spring 114 (not shown). At maximum deformation, torque from the torsion arm at axis 116 causes the scan plate to rotate counterclockwise, while distributed inertial loads cause the ends of the scan plate to lag the center of the scan plate. It may be noted that for applications where the scan plate is being driven through the torsion arm by one or more actuators, such as the example of Figure 4A, torque 408 is increased slightly relative to applications where the scan plate or suspension itself is being driven; but for resonant scanning, the vast majority of driving force is generated by energy stored in the springs (torsion arms).

Figure 4C is a side view of a MEMS scanner showing reduced dynamic deformation in the scan plate achieved by using a suspension. Scan plate 112 is shown at maximum deformation, being driven counterclockwise about axis 116. Lateral connections 405 (not shown) drive the scan plate counterclockwise as illustrated by tangential forces 410a and 410b. Additionally, axial connection 404 (not shown) drives the scan plate counterclockwise at axis 116 as shown by torque 408. Because suspension beams 403 (not shown) are themselves dynamically deformed such that both left and right ends are rotated clockwise relative to the scan plate (in a manner akin to the deformation of the un-suspended scan plate 112 of Figure 4B), torques 412a and 412b are additionally applied to the ends of the scan plate through respective lateral connections 405a,b and 405c,d (not shown). The combined effects of torques 408 and 412a tend to drive the left side of scan plate 112 downward while the combined effects of torques 408 and 412b tend to drive the right side of scan plate 112 upward, the effect of which helps keep the respective intermediate portions of scan plate 112 flat. Thus the use of a suspension partly or substantially overcomes the deformation related to inertial lag exhibited by the significantly deformed scan plate of Figure 4B.

As implied above, because a large majority of the driving force in a resonant system comes from the stored energy in the torsion arms, the use of a suspension may be used to help maintain scan plate flatness for plates that are driven directly as well as for plates that are driven through torsion arms.

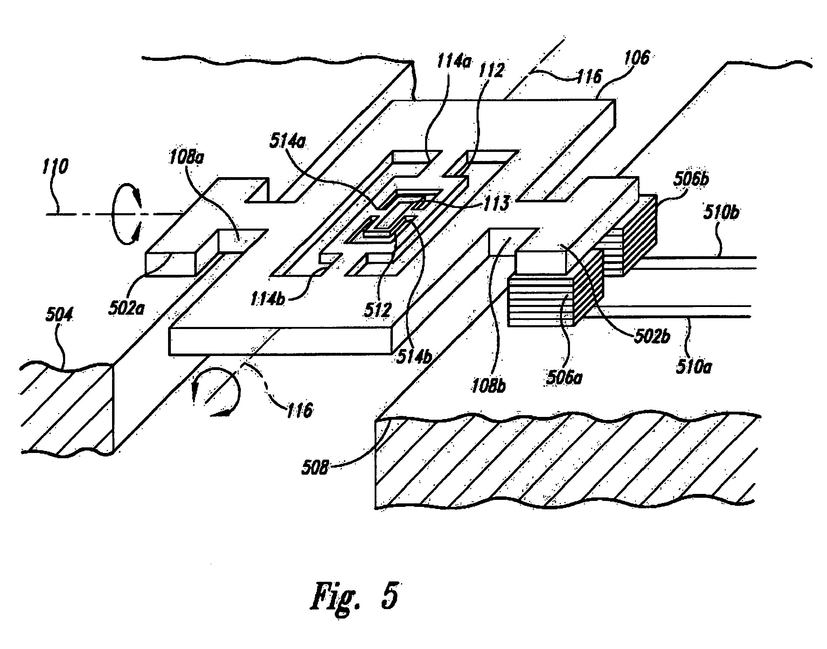

While the examples shown heretofore have used moving-coil magnetically driven actuators, other types of actuation technologies; including moving-magnet, electrocapacitive, piezoelectric, impact motor, fluid, and others; may be similarly multiplexed to generate movement in multiple axes. Additionally, the principles taught herein may be applied to driving single axis scanners through mechanical coupling across torsion arms. Figure 5 is an example of a multi-axis scanner mechanically coupled across a torsion arm to stacked piezoelectric actuators. Gimbal 106 is suspended by torsion arms 108a and 108b. Torsion arm 108a terminates at an anchor pad 502a that is, in turn, attached to a fixed substrate 504. Torsion arm 108b terminates at a drive pad 502b that is coupled to piezoelectric stacks 506 and 506'. Piezoelectric stacks 506 and 506' are mounted on fixed substrate 508 and are coupled to a drive signal respectively by electrical traces 510a and 510b at their lower ends and are coupled in series by an electrical trace on their upper ends (trace not shown).

As an alternative to the example of Figure 5, anchor pad 502a could be made into a drive pad by coupling it to a second pair of piezoelectric drive stacks, thus driving the assembly through both torsion arms 108a and 108b.

Piezoelectric stacks 506 and 506' may be such that when trace 510a is set to a higher voltage than trace 510b, the potential causes stack 506a to extend and 506b to compress. When trace 510b is set to a higher voltage than trace 510a, the opposite potential causes stack 506b to extend and stack 506a to compress. By energizing traces 510a and 510b with an alternating periodic signal, piezoelectric stacks 506a and 506b alternately extend and compress in opposition to one another, causing a slight twisting motion of drive pad 502b. In an alternative arrangement, piezoelectric stacks 506a and 506b may be driven independently, each through a pair of leads.

The slight twisting motion of drive pad 502b is transmitted as torsional stress through torsion arm 114b to gimbal 106. For a given drive frequency, the amplitude of movement of gimbal ring 106 (and other structures suspended therefrom) will be proportional to the voltage of the drive signal and to the mechanical amplification factor of the rotating mass at the drive frequency (although not necessarily linearly proportional). For drive frequency components at or near the resonance frequency of the gimbal ring (and suspended structures), the rotation of drive pad 502b will be amplified, a small amount of drive pad rotation corresponding to a relatively larger rotation of gimbal ring 106. For off resonance drive frequency components, the amplitude of rotation of the gimbal ring is reduced and, at certain frequency ranges, inverted.

Gimbal ring 112 may be caused to oscillate periodically by introducing an asymmetry to the system. Such an asymmetry may include a mass asymmetry about one or more axes of rotation (thus introducing a slight bending mode in the respective plate or gimbal), a rotation axis asymmetry (e.g. axis 116 not being at a perfectly right angle to axis 110), or a drive asymmetry.

A drive asymmetry may be introduced by superimposing one or more in-phase frequency components to piezo stacks 506 and 506'. Such a drive asymmetry results in a slight upward-downward periodic motion of the drive pad 502b. This slight upward-downward periodic motion (which may be of the same or opposite sign compared to the upward-downward motion of the drive pad 502b) is communicated through gimbal ring 106 as a slight rotation about axis 116. The rotation of gimbal ring 106 about axis 116 is then amplified as a function of the mechanical amplification factor of gimbal ring 112 (with carried components including torsion arms 514a,b and inner scan plate 512), resulting in an intended rotation of gimbal ring 112 about axis 116.

As may be seen, the mechanical coupling may be extended to additional scan plates. Scan plate 112 acts as a gimbal ring for inner scan plate 512, which is suspended from scan plate 112 by torsion arms 514a and 514b. In the example of Figure 5, inner scan plate 512 is formed to rotate about axis 110. When the drive signal energizing traces 510a and 510b further comprises a frequency component equal to the resonant frequency of scan plate 512, the slight twisting of drive pad 502b arising therefrom is transmitted through torsion arm 108b, gimbal ring 106, torsion arms 114a and 114b, scan plate 112, and torsion arms 514a and 514b to scan plate 512 so as to drive scan plate 512 to rotate about axis 110 at a transmitted frequency where the mechanical amplification factor of inner scan plate 512 results in rotation.

In some embodiments, scan plate 512 may include a mirror 113 formed thereon. One application for such a device is to create a raster pinch correction mirror in a 2D beam scanning system. The phase relationships between and amplitudes of the various frequency components of the drive signal may be controlled. In a raster pinch correcting system, inner scan plate 512 may be designed to have a resonant frequency twice that of scan plate 112. Its phase and amplitude may be selected to create a vertical scan moving in opposition to and substantially equal to the vertical scan motion of gimbal 106 while scan plate 112 is traversing across its scan range, and in the same direction as gimbal 106 while scan plate 112 is at the end of its travel. Thus, the mirror 113 may deflect a beam comprising substantially parallel paths in both left-to-right and right-to-left scanning directions, substantially eliminating raster pinch.

As may be seen, additional levels of scan plates may be nested and driven without incurring the additional expense, yield loss, and electrical loss associated with the formation of additional nested actuators. One consideration is that successive scan plates are driven via at least minimal resonant response of intermediate plates, expressed in the primary axis of motion of the finally driven plate.

Alternatively, scan plates 112 and 512 could be eliminated and the system used to drive a single-axis scan plate 106. As may be appreciated, various combinations of the embodiments of figures 1, 3, 4, and 5 could be constructed within the scope of the invention.

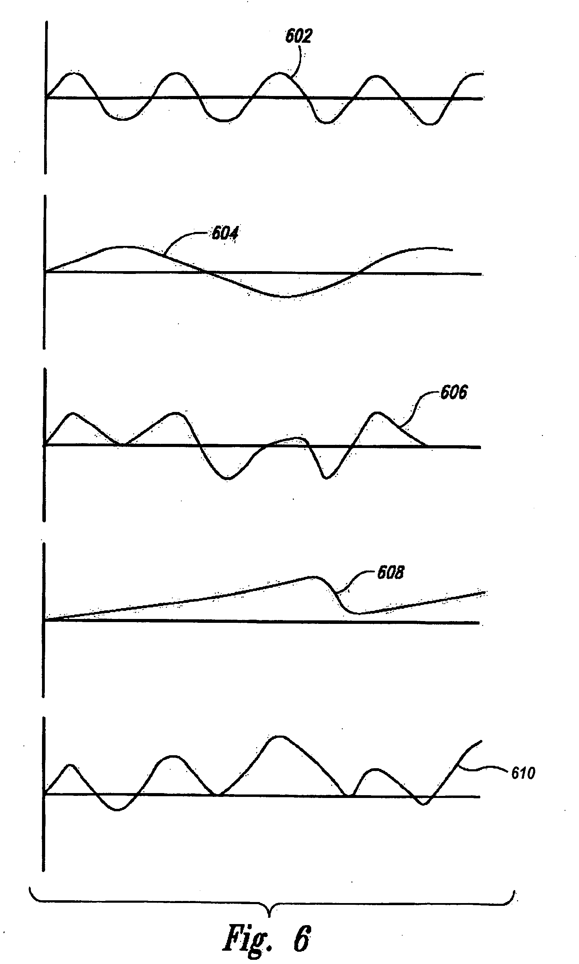

As described above, the drive signals for actuating many of the embodiments according to the invention involve combinations of waveforms. By selecting mechanical amplification factors, resonant frequencies, and drive signals acting on various portions of the MEMS apparatus, a broad range of design freedom may be enjoyed. Figure 6 shows an example of waveforms for driving a plurality of oscillating elements. Waveform 602 is a high frequency signal for driving a first oscillator component at a corresponding high resonant frequency. Waveform 604 is a lower frequency signal for driving a second oscillator component at a corresponding lower resonant frequency. Waveform 606 combines the signals of waveforms 602 and 604. A signal corresponding to waveform 606 may be transmitted to the actuator or actuators of MEMS scanners constructed according to the invention. Each frequency component 602 and 604 will thus actuate a particular oscillating element in accordance with its resonant frequency and amplification factor.

Waveform 608 is a non-resonant signal for driving a scanner component in a non-resonant manner. Waveform 610 combines the signals of waveforms 602 and 608. A signal corresponding to waveform 610 may be transmitted to MEMS scanners constructed according to the invention. When the amplification factor of a scanner component having a resonant frequency corresponding to signal 602 is sufficiently high, the component will reject signals of different frequencies. Conversely, scanner components that have low amplification factor will tend to receive a broad range of signals. Signal component 608 of waveform 610 may, for example, result in a progressive scan and flyback of a low amplification factor gimbal ring having a relatively large number of actuator coil windings while signal component 602 of waveform 610 drives its nested high amplification factor inner scan plate.

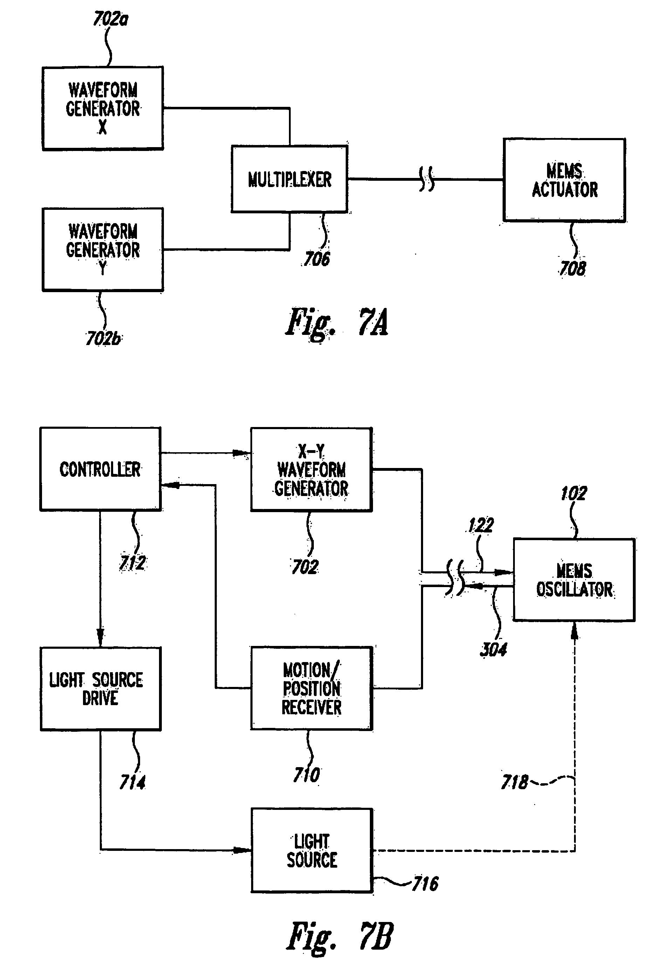

Figure 7A is a block diagram of a signal generator that combines individual signal components into a drive signal for driving a MEMS scanner having components preferentially responsive to each of the signal components. X-axis waveform generator 702a and y-axis waveform generator 702b each generate a respective signal for driving a MEMS scanner to move about the x and y-axes. Such movement may be rotational, translational, or other modes as appropriate for the application. Waveforms such as those shown in Figure 6 may be used for example. If waveform generator 702a generates waveform 602 and waveform generator 702b generates waveform 604, they may be combined in multiplexer (MUX) 706 to produce combined waveform 606. Alternatively waveform generator 702b may generate a non-sinusoidal signal such as waveform 608. In that case MUX 706 may combine the waveforms generated in waveform generator 702a and 702b to produce a signal such as waveform 610. The combined waveform is transmitted to a MEMS actuator 708, which may be of many forms including series coils 118 and 120 of Figure 1, combined drive coil 202 Figures 3A, 3B, 3C and 4, piezoelectric stacks 506 and 506' of Figure 5, or other types of actuators. As an alternative to discrete waveform generators 702a and 702b, an integrated device may produce drive waveforms such that individual components (for example waveforms 602 and 604) are not exposed or literally present.

Figure 7B illustrates a MEMS drive block diagram having an integrated x-y waveform generator 702 and a motion/position detector 710 connected to a controller 712. Controller 712 issues waveform parameters to x-y waveform generator 702. X-Y waveform generator 702 creates drive waveforms and transmits them to a MEMS scanner 102 via drive traces 122. The physical position and/or motion is sensed and transmitted from the MEMS scanner 102 to a motion/position receiver 710 via sense traces 304. Motion position receiver 710 informs controller 712 of the motion and/or position of the MEMS scanner. The controller may then maintain or modify the waveform parameters sent to the x-y waveform generator depending upon whether or not the MEMS scanner is performing the desired motion. Controller 712 may instruct the light source drive 714 to vary the sequential emission pattern of light source 716 to perform image remapping to take into account the actual position of the mirror on MEMS scanner 102. Light source 716 emits a beam 718, which is deflected by the mirror on MEMS scan plate 112 onto a field-of-view corresponding to the sensed position of the scan plate.

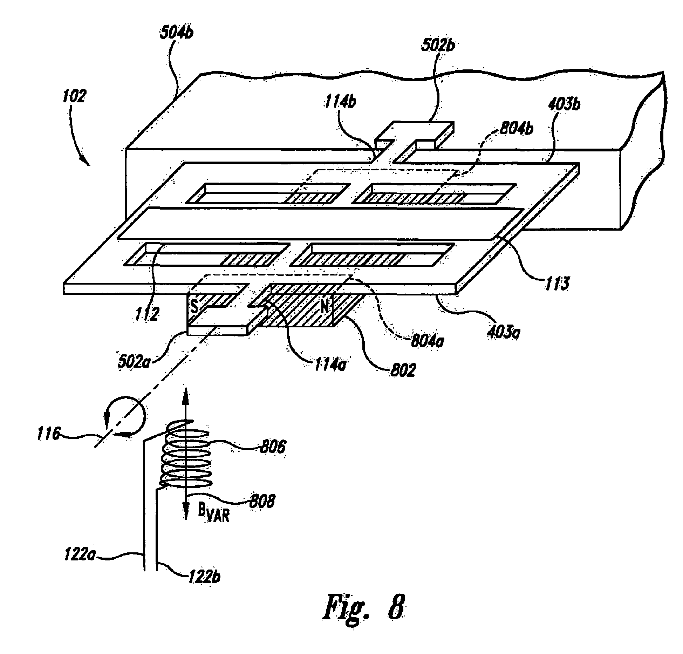

While magnetic drive designs shown heretofore have been moving coil types, it is also possible to apply the principles described herein to moving magnet MEMS designs. Figure 8 shows a single axis moving magnet MEMS scanner having suspensions for reducing mirror distortion. Scan plate 112 has mirror 113 on its surface. Scan plate 112 is suspended from torsion arms 114a and 114b, which, in turn, terminate at anchor pads 502a and 502b, respectively. Anchor pads 502a and 502b are attached respectively to substrates 504a (not shown) and 504b. Drive magnet 802, which may be a permanent magnet or an electromagnet, is attached to the scanner assembly at attachment points 804a and 804b as indicated in the Figure 8. North and south poles of drive magnet 802 are aligned respectively to the right and left sides of magnet as indicated in the Figure.

Actuator coil 806 is placed below scanner 102 on its centerline as indicated. Alternatively, actuator coil 806 may be placed at a different location such as in-plane or above scanner 102. Actuator coil 806 is energized by leads 122a and 122b to create a variable magnetic B field 808. When electromagnet 806 is energized to produce a magnetic be field 808 oriented north up, the south pole of drive magnet 802 is attracted thereto and the north pole of drive magnet 802 repelled therefrom, causing scanner 102 to rotate counterclockwise about axis 116. Conversely, when electromagnet 806 drives magnetic field 808 south up, the south pole of drive magnet 802 is repelled and the north pole attracted, causing scanner 102 to rotate clockwise about axis 116.

Drive magnet 802 is affixed to the scanner assembly at attachment points 804a and 804b as indicated. A moving magnet actuator and torsion spring energy storage can cooperate to generate a significant amount of torque, which could distort mirror 113 if drive magnet 802 and torsion arms 114a and 114b were affixed directly thereto. Instead, attachment of drive magnet 802 and torsion arms 114a and 114b to respective suspension beams 403a and 403b confines distortion to the suspension elements, keeping mirror surface 113 flat as illustrated in Figures 4B and 4C. Suspension beams 403a and 403b may be attached to oscillating mass 112 in various arrangements. In some embodiments it may be optimal to attach suspension beams 403 to oscillating mass 112 at three points as indicated. Finite element analysis can aid the designer in selecting optimum attachment points.

As an alternative to suspending oscillating mass 112 from a pair of torsion arms, various cantilevered or other designs may be substituted.

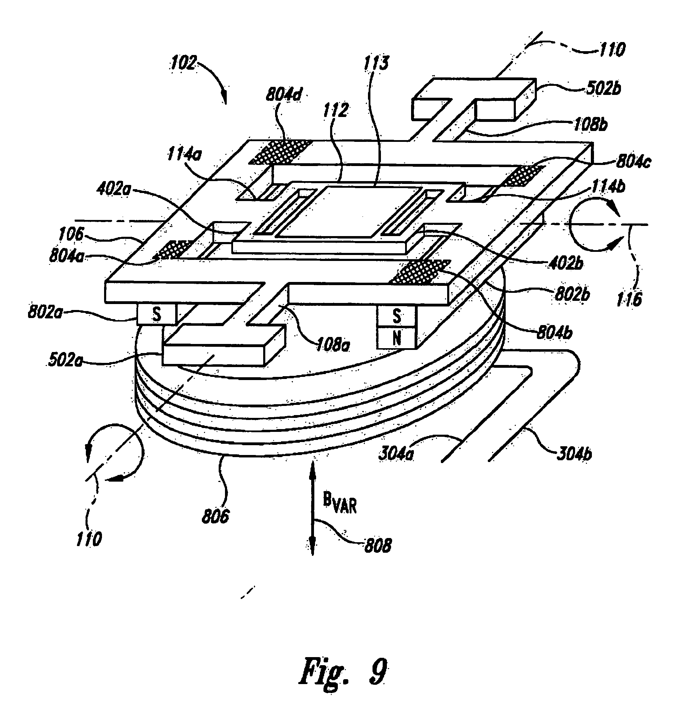

Figure 9 shows a moving magnet embodiment of a two-axis MEMS scanner 102. As with the MEMS scanners of Figure 8 and Figure 5, anchor pads 502a and 502b attach the assembly to mounting points. Torsion arms 108a and 108b extending therefrom support gimbal ring 106. Gimbal ring 106, in turn, serves as an anchor for torsion arms 114a and 114b, which connect to suspensions 402a and 402b, respectively. Suspensions 402a and 402b connect to oscillating mass 112 which has a mirror surface 113 disposed thereon.

Two drive magnets 802a and 802b may be affixed to gimbal ring 106 as shown to provide actuation force. Drive magnet 802a is attached to gimbal ring 106 at attachment points 804a and 804d where the dotted lines represent locations on the bottom surface of gimbal ring 106. Similarly, drive magnet 802b is attached to gimbal ring 106 at attachment points 804b and 804c. In some embodiments, it may be desirable to arrange the north and south poles of drive magnets 802a and 802b to be anti-parallel to one another as indicated. Such an arrangement allows a single actuator to create opposing forces in the drive magnets for rotating the assembly around axis 110.

The moving magnet oscillating assembly of Figure 9 is driven by an electromagnetic actuator 806, which, for example, may be disposed below the plane of the MEMS scanner as indicated. As may be appreciated by those having skill in the art, other positions for electromagnet 806 are also possible. Drive magnet 806 is driven to produce a variable magnetic B field 808 via leads 304a and 304b. When electromagnet 806 is driven to produce a variable magnetic field 808 with north up, drive magnet 802a is attracted thereto while drive magnet 802b is repelled therefrom. This produces torsional force in the counterclockwise direction about axis 110 and drives the scan plate to rotate counterclockwise. Conversely, when variable magnetic field 808 is driven south up, Drive magnet 802a is repelled and drive magnet 802b is attracted, producing rotation in the clockwise direction about axis 110.

Various waveforms may be used to drive rotation about axis 110. For example, a sinusoidal waveform such as waveform 604 of Figure 6 may, with proper frequency selection, produce resonant rotation about axis 110. In other embodiments, a ramped waveform approximating a sawtooth waveform, such as waveform 608 of Figure 6 may be used to produce non-sinusoidal, non-resonant motion.

As indicated above, one scan plate 112 is suspended from the gimbal ring 106 on torsion arms 114a and 114b. As with other examples, the mass distribution of scan plate 112 and the stiffness of torsion arms 114a and 114b determine a resonant frequency and mechanical amplification factor for scan plate 112. In a manner similar to other examples, electromagnet 806 may be driven with a composite waveform comprising a plurality of frequency components.

Of note in the example of Figure 9, is the asymmetry of the placement of the drive magnets 802a and 802b. Drive magnet 802a is mounted at its far end at outer position 804d and its near end (respectively, as pictured) at inner position 804a. The asymmetry of drive magnet 802b is reversed, with its near end being mounted in an outer position 804b and its far end mounted at an inner position 804c. This drive asymmetry results in a slight rotation of gimbal ring 106 about axis 116.

When variable B field 808 is driven with a frequency component having a frequency equal or near to the resonant frequency of scan plate 112, scan plate 112 will be sympathetically driven to oscillate about axis 116. In a manner similar to the MEMS devices of Figures 4 and 5, slight twisting of gimbal ring 106 about axis 116 is amplified by the resonant system of scan plate 112, creating torsional force through torsion arms 114a and 114b. Though the overall twisting of gimbal ring 106 maybe slight, the amount of torque transmitted to scan plate 112, arising both from driving torque and energy stored in torsion arms 114a and 114b, may be sizable. To reduce the tendency of this torsional force to distort scan plate 112, and hence mirror surface 113, suspensions 402a and 402b are interposed between scan plate 112 and torsion arms 114a 114b, respectively.

Thus a composite drive signal such as waveforms 606 or 610 may be fed through leads 304a and 304b to produce movement in two or more axes according to the resonant properties of the oscillating components.

As described above, one or more other asymmetries including rotation axis asymmetry and/or mass distribution asymmetry, could alternatively or additionally be used to drive rotation of scan plate 112.

As an alternative to the sympathetic drive system of Figure 9, each of the various oscillating components could be driven directly by placement of drive magnets thereon.

As with other examples presented herein, a DC bias current in coil 806 in either direction will tend to shift the amplitude of rotation of the driven member (i.e. gimbal ring 106 in the example of Figure 9) to one side or the other depending upon the direction of the DC bias. This effect is especially pronounced with magnetic drive, owing to the relatively high drive torque of such systems. Such a DC bias current may be used to vary or adjust the nominal direction in which mirror 103 is aimed. This may be useful, for example, to change the exit pupil position of a scanned beam display or to pan the field-of-view for a scanned beam image capture device.

While Figure 9 shows a two axis, two body scanner (i.e. a single scan plate and a single gimbal ring), it may be appreciated that the moving magnet design may be readily applied to single-axis, greater than two axes, single-body, or greater than two bodies applications as well.

As mentioned earlier, the principles described herein may be applied to the various MEMS Drive systems, magnetic or non-magnetic. For example, electrocapacitive drive pads or electrocapacitive interdigitated arms could be substituted for the drive magnets and electromagnets used in the previous examples. Alternatively, thermal, fluidic, or other actuation mechanisms could be substituted and remain within the intended scope.

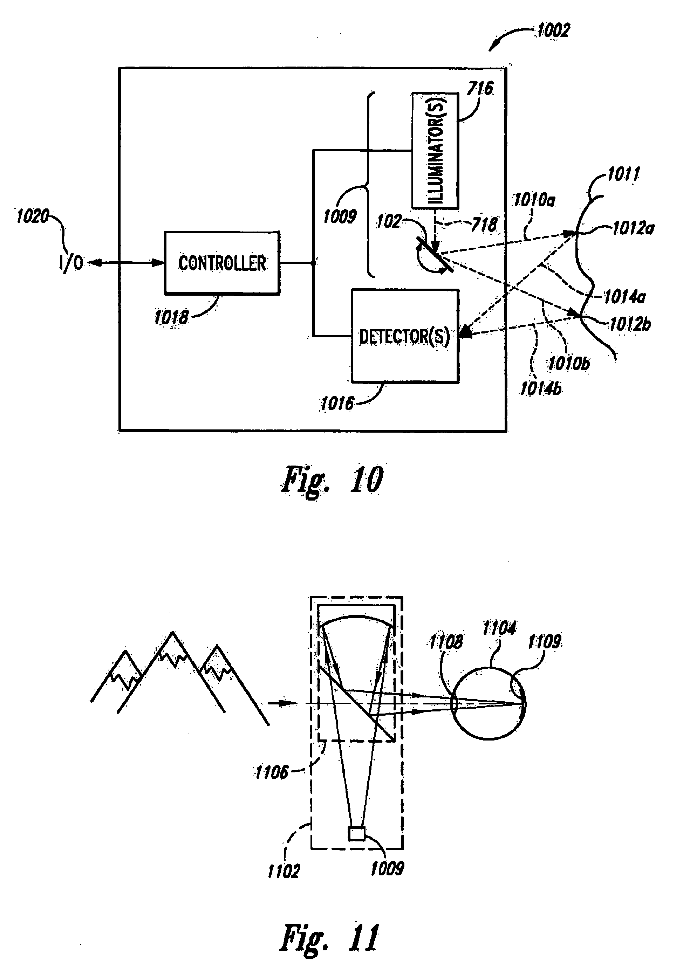

Various embodiments of MEMS scanners described herein may be employed to scan beams of light in a scanned beam image capture apparatus, scanned beam displays, laser printer imaging systems, or other applications. A simplified block diagram of a scanned beam image capture apparatus 1002 is shown in Figure 10. An illuminator 716 creates a first beam of light 718. A scanner 102, having a mirror formed thereon, deflects the first beam of light across a field-of-view (FOV) to produce a second scanned beam of light 1010. Taken together, the illuminator 716 and scanner 102 comprise a variable illuminator 1009. Instantaneous positions of scanned beam of light 1010 may be designated as 1010a, 1010b, etc. The scanned beam of light 1010 sequentially illuminates spots 1012 in the FOV. The scanned beam 1010 at positions 1010a and 1010b illuminates spots 1012a and 1012b in the FOV, respectively. While the beam 1010 illuminates the spots, a portion of the illuminating light beam 1014 is reflected according to the properties of the object or material at the spots to produce scattering or reflecting the light energy. A portion of the scattered light energy travels to one or more detectors 1016 that receive the light and produce electrical signals corresponding to the amount of light energy received. The electrical signals drive a controller 1018 that builds up a digital representation and transmits it for further processing, decoding, archiving, printing, display, or other treatment or use via interface 1020.

The light source 716 may include multiple emitters such as, for instance, light emitting diodes (LEDs), lasers, thermal sources, arc sources, fluorescent sources, gas discharge sources, or other types of illuminators. In one embodiment, illuminator 716 comprises a red laser diode having a wavelength of approximately 635 to 670 nanometers (nm). In another embodiment, illuminator 716 comprises three lasers; a red diode laser, a green diode-pumped solid state (DPSS) laser, and a blue DPSS laser at approximately 635 nm, 532 nm, and 473 nm, respectively. While laser diodes may be directly modulated, DPSS lasers generally require external modulation such as an acousto-optic modulator (AOM) for instance. In the case where an external modulator is used, it is typically considered part of light source 716. Light source 716 may include, in the case of multiple emitters, beam combining optics to combine some or all of the emitters into a single beam. Light source 716 may also include beam-shaping optics such as one or more collimating lenses and/or apertures. Additionally, while the wavelengths described in the previous embodiments have been in the optically visible range, other wavelengths are within the scope of the invention.

As mentioned earlier, embodiments according to the invention may be applied not only to scanning mirrors, but to other types of MEMS devices as well. For example, a scan plate may have light emitters or a fiber optic termination thereon in place of a mirror. Such devices may be used to directly move the light beam in one or more axes in place of or auxiliary to a scanning mirror 103.

Light beam 718, while illustrated as a single beam, may comprise a plurality of beams converging on a single scanner 102 or onto separate scanners 102.

A 2D MEMS scanner 102 scans one or more light beams at high speed in a pattern that covers an entire 2D FOV or a selected region of a 2D FOV within a frame period. A typical frame rate may be 60 Hz, for example. Often, it is advantageous to run one or both scan axes resonantly. In one embodiment, one axis is run resonantly at about 19 KHz while the other axis is run non-resonantly in a sawtooth pattern to create a progressive scan pattern. A progressively scanned bi-directional approach with a single beam, scanning horizontally at scan frequency of approximately 19 KHz and scanning vertically in sawtooth pattern at 60 Hz can approximate SVGA resolution. In one such system, the horizontal scan motion is driven electrocapacitively and the vertical scan motion is driven magnetically. Alternatively, both the horizontal and vertical scan may be driven magnetically or capacitively. Electrocapacitive driving may include electrocapacitive plates, comb drives or similar approaches. In various embodiments, both axes may be driven sinusoidally or resonantly. Other driving methodologies as described above or as may be clear to one having skill in the art may alternatively be used.

Several types of detectors may be appropriate, depending upon the application or configuration. For example, in one embodiment, the detector may include a PIN photodiode connected to an amplifier and digitizer. In this configuration, beam position information is retrieved from the scanner or, alternatively, from optical mechanisms, and image resolution is determined by the size and shape of scanning spot 1012. In the case of multi-color imaging, the detector 1016 may comprise more sophisticated splitting and filtering to separate the scattered light into its component parts prior to detection. As alternatives to PIN photodiodes, avalanche photodiodes (APDs) or photomultiplier tubes (PMTs) may be preferred for certain applications, particularly low light applications.

In various approaches, photodetectors such as PIN photodiodes, APDs, and PMTs may be arranged to stare at the entire FOV, stare at a portion of the FOV, collect light retro-collectively, or collect light confocally, depending upon the application. In some embodiments, the photodetector 1016 collects light through filters to eliminate much of the ambient light.

The scanned beam image capture device may be embodied as monochrome, as full-color, and even as a hyper-spectral. In some embodiments, it may also be desirable to add color channels between the conventional RGB channels used for many color cameras. Herein, the term grayscale and related discussion shall be understood to refer to each of these embodiments as well as other methods or applications within the scope of the invention. Pixel gray levels may comprise a single value in the case of a monochrome system, or may comprise an RGB triad or greater in the case of color or hyper-spectral systems. Control may be applied individually to the output power of particular channels (for instance red, green, and blue channels) or may be applied universally to all channels, for instance as luminance modulation.

Other applications for the MEMS scanners and actuation mechanisms described herein include scanned beam displays such as that described in U. S. Patent No. 5,467,104 of Furness et al., entitled VIRTUAL RETINAL DISPLAY. As shown diagrammatically in Figure 11, in one embodiment of a scanned beam display 1102, a scanning source 1009 outputs a scanned beam of light that is coupled to a viewer's eye 1104 by a beam combiner 1106. In some scanned displays, the scanning source 1009 includes a MEMS scanner with a mirror, as described elsewhere in this document, the mirror being operative to scan a modulated light beam onto a viewer's retina. In other embodiments, the scanning source may include one or more light emitters that are rotated through an angular sweep.

The scanned light enters the eye 1104 through the viewer's pupil 1108 and is imaged onto the retina 1109 by the cornea. In response to the scanned light the viewer perceives an image. In another embodiment, the scanned source 1009 scans the modulated light beam onto a screen that the viewer observes. One example of such a scanner suitable for either type of display is described in U. S. Patent No. 5,557,444 to Melville et al., entitled MINIATURE OPTICAL SCANNER FOR A TWO-AXIS SCANNING SYSTEM.

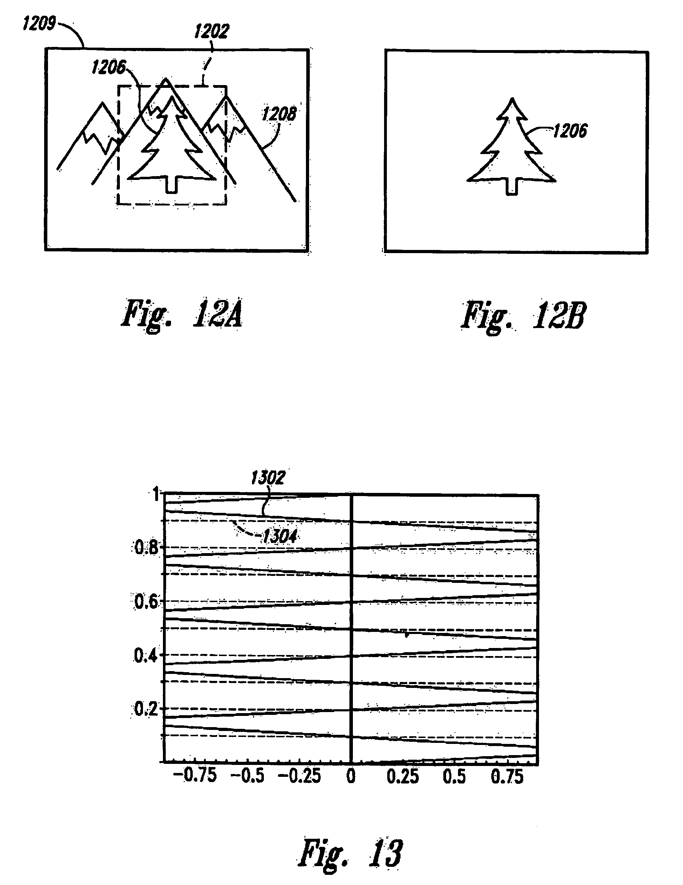

Sometimes such displays are used for partial or augmented view applications. In such applications, a portion of the display is positioned in the user's field of view and presents an image that occupies a region 43 of the user's field of view 1204, as shown in Figure 12A. The user can thus see both a displayed virtual image 1206 and background information 1208. If the background light is occluded, the viewer perceives only the virtual image 1206, as shown in Figure 12B. Applications for see-through and occluded displays include head-mounted displays and camera electronic viewfinders, for example.

As mentioned above in conjunction with the description of Figure 5, one use of various embodiments of the MEMS scanners described herein is as raster pinch correcting scanners. Figure 13 illustrates a scan path 1302 followed by a scanned beam emitted by various devices including scanned beam image capture devices as exemplified in Figure 10 and scanned beam displays as exemplified in Figure 11. Though Figure 13 shows only eleven lines of image, one skilled in the art will recognize that the number of lines in an actual display or imager will typically be much larger than eleven. As can be seen by comparing the actual scan pattern 1302 to a desired raster scan pattern 1304, the actual scanned beam 1302 is "pinched" at the outer edges of the field of view. That is, in successive forward and reverse sweeps of the beam, the pixels near the edge of the scan pattern are unevenly spaced. This uneven spacing can cause the pixels to overlap or can leave a gap between adjacent rows of pixels. Moreover, because the image information is typically provided as an array of data, where each location in the array corresponds to a respective position in the ideal raster pattern 1304, the displaced pixel locations can cause image distortion.

To improve the quality of the image displayed or captured, it is desirable to correct the "pinched" scan path 1302 to more nearly approximate the ideal raster pattern 1304. One way to do this is to provide a separate beam path correction mirror as described in some of the patents cited and incorporated by reference near the end of this detailed description section. However, a separate correction mirror can have undesirable cost, size, and complexity impacts. For many applications, it may be desirable to instead use a scanner assembly 102 that includes a correction feature.

Referring back to Figure 5, one may note that inner scan plate 512 with mirrored surface 113 may be driven to scan around axis 110 in common with outer gimbal 106. If inner scan plate 512 is driven at a frequency twice that of horizontal scan plate 112 at a proper phase relationship, it may be appreciated (absent any motion by gimbal 106) that a scanned beam reflected from mirror 113 could trace a "bow tie" or Lissajous pattern as shown by Figure 14. Combining the Lissajous pattern of Figure 14 with vertical, substantially constant rotational velocity scanning by gimbal 106 produces the corrected scan pattern indicated by Figure 15. Figure 15 shows correction of the "pinched" scan path with a sinusoidal motion of the correction mirror where the horizontal field of view encompasses 90 percent of the overall horizontal scan angle. One skilled in the art will recognize that the error in position of the beam can be reduced further if the field of view is a smaller percentage of the overall horizontal scan angle.

Correction scanners may be sympathetically or directly driven. Of course, it is not necessary to use the stacked piezoelectric drive mechanism of Figure 5. Other drive mechanisms including moving coil magnetic, moving magnet magnetic, electrocapacitive, differential thermal expansion, etc. may be used.

Further reductions in the scan error can be realized by adding one or more additional correction mirrors to scanner 102. Such scan plates may be added in a nested fashion as indicated in Figure 5 or, with the use of a "double bounce" or other beam path that returns the beam to the plane of the substrate of scanner 102, may be positioned laterally in either axis to first scan mirror 113. Another approach to reducing the error is to add one or more higher order harmonics to the scanner drive signal so that the scanning pattern of the inner scan plate 512, here acting as a resonant correction scanner, shifts from a sinusoidal scan closer to a sawtooth wave that approximates more precisely the movement of gimbal 106.

Other uses for various embodiments of the MEMS scanner described herein will be apparent to one having skill in the art.

Various embodiments of the MEMS scanner described herein may be integrated into systems and/or combined with embodiments described in U.S. Patents 6,140,979, entitled SCANNED DISPLAY WITH PINCH, TIMING, AND DISTORTION CORRECTION; 6,245,590, entitled FREQUENCY TUNABLE RESONANT SCANNER AND METHOD OF MAKING; 6,285,489, entitled FREQUENCY TUNABLE RESONANT SCANNER WITH AUXILIARY ARMS; 6,331,909, entitled FREQUENCY TUNABLE RESONANT SCANNER; 6,362,912, entitled SCANNED IMAGING APPARATUS WITH SWITCHED FEEDS; 6,384,406, entitled ACTIVE TUNING OF A TORSIONAL RESONANT STRUCTURE; 6,433,907, entitled SCANNED DISPLAY WITH PLURALITY OF SCANNING ASSEMBLIES; 6,512,622, entitled ACTIVE TUNING OF A TORSIONAL RESONANT STRUCTURE; 6,515,278, entitled FREQUENCY TUNABLE RESONANT SCANNER AND METHOD OF MAKING; 6,515,781, entitled SCANNED IMAGING APPARATUS WITH SWITCHED FEEDS; and/or 6,525,310, entitled FREQUENCY TUNABLE RESONANT SCANNER; for example.

Alternatively, illuminator 104, scanner 102, and/or detector 116 may comprise an integrated beam scanning assembly as is described in U.S. Patent 5,714,750, BAR CODE SCANNING AND READING APPARATUS AND DIFFRACTIVE LIGHT COLLECTION DEVICE SUITABLE FOR USE THEREIN.

As indicated above in conjunction with the discussion of Figures 1, 3A, 4A, 5, 6, 7A, 7B, and 9, rotation or other movement about various axes is determined according to the physical response of the moving body. In those discussions, there was assumed to be little interaction between the various axes of rotation or other movement. In real-world scenarios however the interaction between modes and moving bodies may be significant.

Figure 16 illustrates a simplified response curve 1602 for rotation of a scan plate having a resonant frequency f_{R}. In this figure the vertical axis is denoted displacement amplitude, and indicates a physical response. While a rotational response is plotted by the curve 1602 of Figure 16, other response modes may be similarly represented. For example, a "pumping mode" would involve up-down translational movement. The coupling between portions of scanners may thus be used to drive modes other than rotation.

As is characteristic of many response curves, the displacement amplitude of the oscillating body increases monotonically with frequency until it nears its resonant frequency, at which point the response climbs rapidly to a finite level corresponding to mechanical amplification factor of the body at its resonant frequency. As frequency is increased further the curve drops, sometimes precipitously, as the body is no longer able to respond at the rate of the drive signal. It is frequently convenient to design systems to drive the MEMS device at or near its resonant frequency to conserve energy and reduce power consumption.

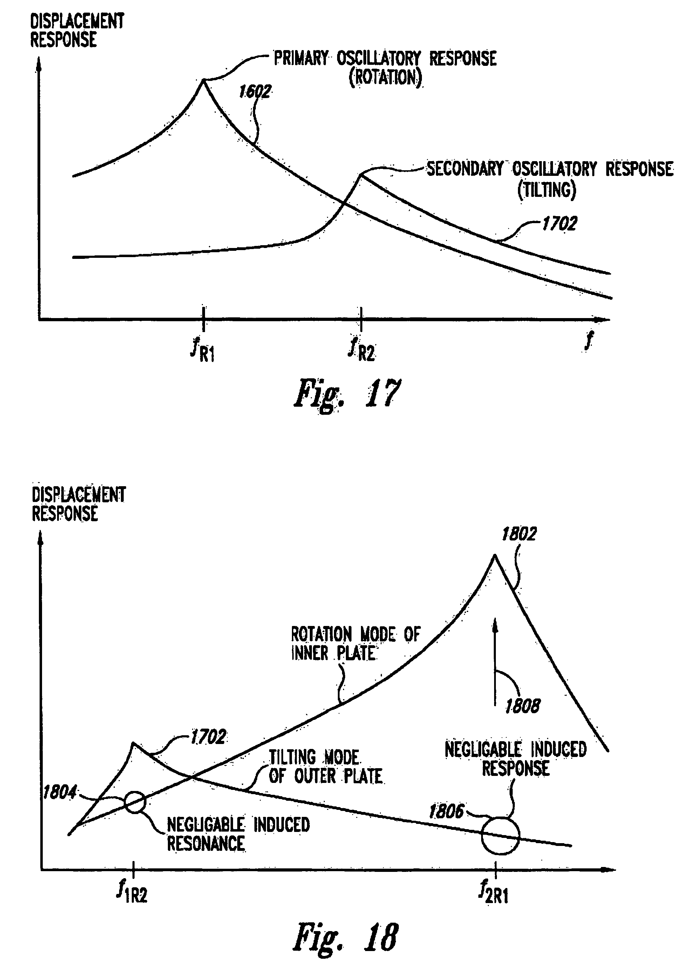

Where the response curve of Figure 16 indicates response of a single oscillating body around a single axis, the response curves of Figure 17 show the response for a body around multiple axes. Here again, frequency is plotted along the horizontal axis increasing to the right and the displacement response amplitude is plotted on the vertical axis with larger displacement higher on the axis. The primary oscillatory response curve 1602 has a resonant frequency at f_{R1} and is similar in shape to the response curve 1602 shown in Figure 16. Also shown in Figure 17 is a secondary oscillatory response curve 1702. Response curve 1702 indicates the response of the body along some other movement axis and represents a second excitation mode. For the present discussion it is assumed the primary oscillatory response 1602 measures rotation around an axis defined by a pair of torsion arms. The secondary oscillatory response curve 1702 represents a tilting response for rotation about an axis in plane and orthogonal to the primary axis of rotation. The primary oscillatory response may be envisioned as rotation about a pair of torsion arms. The secondary oscillatory response can be envisioned as tilting with the pair of torsion arms alternately bending up and bending down out of the plane of the device.

It should be noted that the secondary response curve 1702 displays a second resonant frequency f_{R2} that may be the same as or different from the primary mode resonance frequency f_{R1}. For the present discussion it is assumed that f_{R2} is somewhat higher in frequency that f_{R1} and that the maximum displacement response amplitude in the secondary axis (the mechanical amplification factor) is lower than the amount of response of the primary axis.

Referring now to Figure 18, there is a relationship between various modes of motion of the various bodies of a MEMS device. Curve 1702 represents the secondary resonant response of a first moving body. In this case the first moving body is a gimbal ring. As indicated in the earlier figures, the secondary response (corresponding to tilting about an axis 116, orthogonal to the gimbal ring support arm axis 110) increases relatively smoothly and monotonically as one increases frequency to f_{1R2} (i.e. the resonance frequency of the first body in mode 2) corresponding to a single resonance frequency of the system in the second movement response, and then decreases smoothly and monotonically as the drive frequency is raised further. For one real system the resonance frequency of curve 1702 is equal to approximately 1500 hertz.

Superimposed over curve 1702, which represents tilting of the outer plate, is response curve 1802, representing rotation of an inner plate. For examples of physical embodiments one may refer to inner plate 112 and gimbal ring 106 of Figures 1 or 4. Thus, curve 1702 represents tilting of the gimbal ring 106 about axis 116, and response curve 1802 represents rotation of inner plate 112 also about axis 116. In the example of Figure 18, response curve 1802 increases monotonically with frequency until it reaches a resonance frequency f_{2R1} (i.e. the resonant frequency of the second plate in rotation about axis 116). As frequency is increased further the response of the inner plate 112 decreases. For one real system the resonance frequency f_{2R1} of curve 1802 is about 20kHz.

It is notable that the resonant frequencies of the two response curves shown in Figure 18 are relatively widely separated, at 1500 hertz and 20kHz respectively for curves 1702 and 1802. This may be seen from inspection of point 1804 on curve 1802, corresponding to the resonance frequency of curve 1702, and inspection of point 1806 on curve 1702, corresponding to the resonance frequency of curve 1802. In each case the shape of the curve is relatively unaffected by the resonance of the other plate, each curve instead resembling the "pure" responses of Figures 16 and 17.

Thus, when the outer plate is driven at f_{2R1} of 20 KHz, it tilts very slightly according to the displacement amplitude of curve 1702 at that frequency, but induces a sizable displacement in the inner plate, which rotates significantly according to the displacement amplitude of curve 1802 at that frequency. This energy transfer is indicated by arrow 1808. This situation corresponds to the cases described earlier, which referred to very slight displacement of one member inducing sizable displacement in another member.

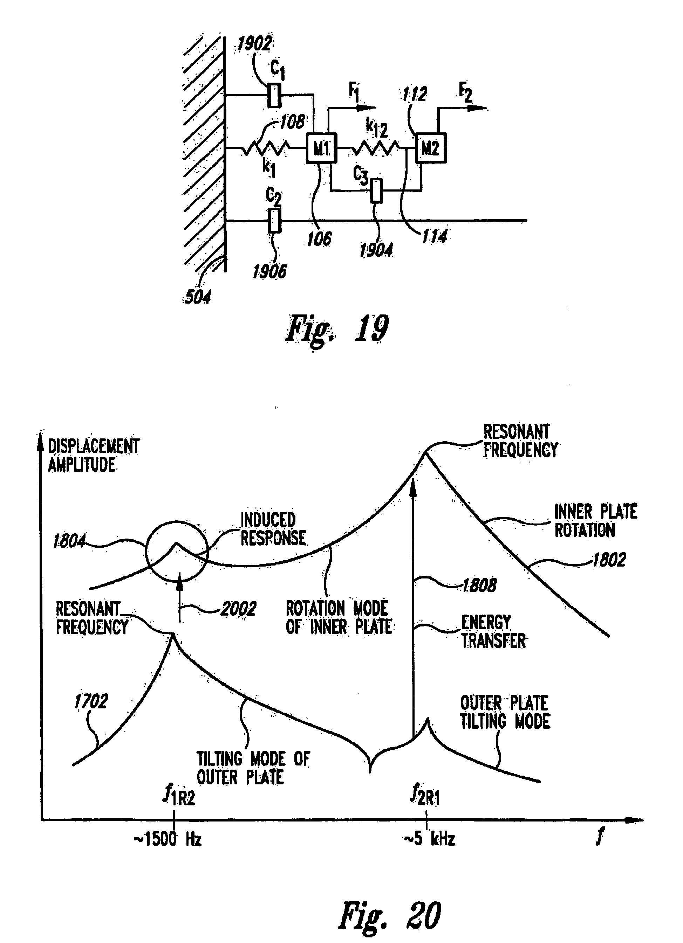

When resonance frequencies of various components of the MEMS system are closer together, other interactions may occur, with each resonance mode affecting the response of the other modes. Before looking at the shapes of curves for such interactions, we refer to Figure 19, which shows one way to model the mechanical system.

In the model of Figure 19, a base 504, corresponding to a mounting point of the system, is elastically coupled to a first mass M1 106 (corresponding for example to a gimbal ring) through a spring with stiffness k₁ and with energy dissipation (non-elastic response) represented by coefficient c₁. These are modeled respectively as a spring 108 and a dash pot 1902. A force F₁ (not to be confused with lowercase f, used to designate frequency), corresponding to an actuator, may act to displace mass M1 from its rest position. Spring 108 will act to restore mass M1 to its rest position, as modified by the damping action of dash pot 1902.

In this example, spring 108 is numbered to correspond to torsion arms 108a and 108b of Figures 1 and 4. Correspondingly mass M1 106 is numbered to correspond to gimbal ring 106 of the same figures. While the primary displacement of mass M1 106 in response to force F₁ is, at many frequencies, rotation about axis 110, one may recognize that mass M1 106 may also be displaced in an orthogonal axis of rotation, i.e. in a tilting mode about axis 116. For the present analysis, the main mode of interest is the secondary mode of tilting about axis 116.

Connected to mass M1 106 is a second mass M2 112. Mass M2 may be modeled as being connected to mass M1 via a spring 114 having a spring constant k₁₂ and a dash pot 1904 having a damping coefficient C₃. Taken in the context of Figures 1 and 4, mass M2 112 may be seen to correspond to inner scan plate 112 (and, if so equipped, the mass of suspensions 402) and spring 114 may be seen to correspond to torsion arms 114a and 114b. Mass M2 112 further interacts with base 504 through dash pot 1906 having a damping coefficient C₂. Damping coefficients C₁, C₂ and C₃ correspond to energy dissipation mechanisms of the system. In particular, C₁ corresponds to two primary effects: energy dissipation the mounting between the MEMS die 102 and base structure 504, and gas damping acting on the gimbal ring. C₂ corresponds primarily to gas damping acting on the inner scan plate 112. C₃, which corresponds primarily to energy dissipation in the torsion arms due to the relative motion of M1 and M2, is usually negligible and is therefore ignored when modeling the system.

As with displacement of mass M1 106, mass M2 112 may be displaced by a force F2. Upon such displacement, spring 114 tends to restore mass M2 to its resting position with respect to mass M1 as a function of its spring constant k₁₂ as modified by the damping coefficient C₂ of dash pot 1906. It can be appreciated that a force F2 acting on mass M2 112 may distend not only spring 114 but also spring 108, depending on the ratio of their respective spring constants k₁₂ and k₁. Under static conditions, force F1 acts only on spring 108 but not on spring 114. Rather the combined inertia of masses M1 106 and M2 112 tend to oppose force F1 under dynamic conditions. Also under dynamic conditions, it can be appreciated that interactions between the various components of the system may produce complex relationships between the movement of mass M1 and mass M2.

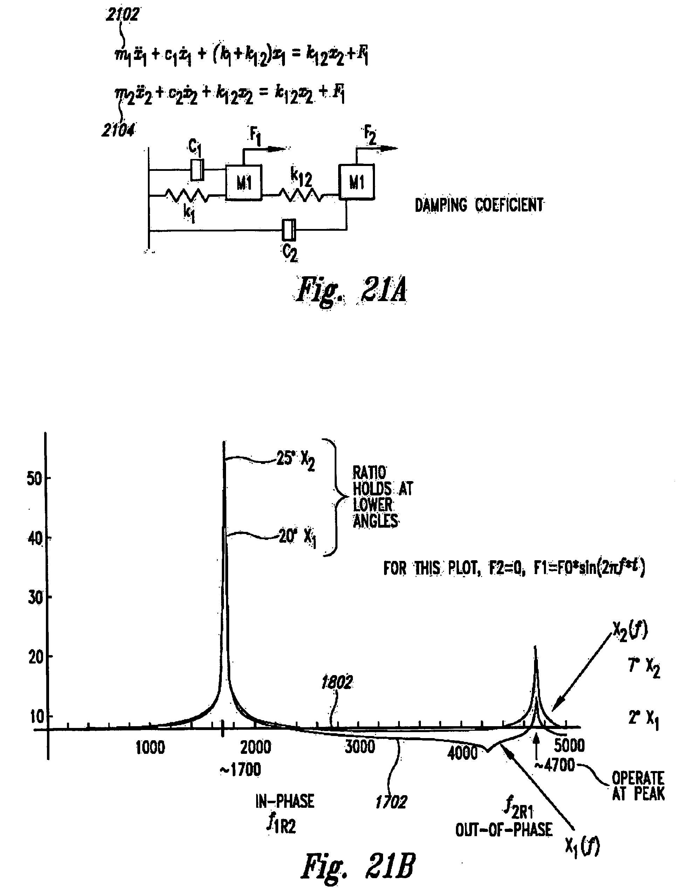

Several simplifying assumptions may be made to ease modeling. These include *linear* behavior of springs and damping (including no hysteresis), massless springs, *linear* behavior of the drive forces, and constants that remain constant with various environmental changes including temperature. For some systems, especially systems that undergo large displacements, such simplifying assumptions may not be appropriate, as is known to those having skill in the art. Using the listed simplifying assumptions, dynamic movements of the system represented by Figure 19 are governed by the differential equations 2102 and 2104 given in Figure 21.

According to the differential equations shown above, when the system corresponding to Figure 19 is driven periodically by force F1, motion of both masses M1 106 and M2 112 will result. For example when F2 is set to zero (i.e. F2 = 0) and F1 is driven in a sine wave (F2 = F0 * sin(2πf*t)), where F0 is the load amplitude, f is frequency, and t is time, the motion of the two masses may respond as shown by curves 1702 and 1802 of Figure 20.

As with Figure 18, curve 1702 of Figure 20 represents the tilting mode of the gimbal ring while curve 1802 represents rotation of the inner scan plate. With respect to the model of Figure 19, curve 1702 also corresponds to displacement of mass M1 106 and curve 1802 corresponds to displacement of mass M2 112 on common displacement axes. In accordance with the structures of Figures 1 and 4, the common displacement axis 116 is exhibited as tilting of the gimbal ring in the case of curve 1702 and rotation of the inner scan plate in the case of curve 1802.

Curve 1702 rises monotonically until it reaches the resonant frequency f_{1R2} of the tilting mode of the gimbal ring. It then decreases with further increases in frequency. It does not, however, decrease smoothly as with the system of Figure 18. Rather, its shape is affected by the response of curve 1802. In other words, the dynamic response of mass M1 106 is affected by the dynamic response of mass M2 112 as dictated by the spring constants, damping coefficients, and masses of the model of Figure 19. It should be emphasized that the values used in the model correspond to real characteristics of the MEMS device.

Curve 1802 exhibits corresponding interaction with curve 1702. In particular, rather than the curve monotonically increasing until mass M2 reaches its resonant frequency f_{2R1}, curve 1802 shows a peak in response 1804 corresponding to the resonant frequency f_{1R2} of the gimbal ring in tilting mode, as represented by curve 1702. In a physical system, the corresponding peaks at f_{1R2} represent in-phase movement of the scan plate 112 and the gimbal ring 106 about axis 116.

As indicated by arrow 2002 the tilting of the gimbal ring transfers energy to the inner scan plate in the form of rotation. Thus, at f_{1R2}, an actuator physically coupled to the gimbal ring may be used to drive rotation of the scan plate.

As can be seen from Figure 20, in coupled systems having relatively similar resonant frequencies, the scan plate may be driven at a resonant frequency of the gimbal ring. For this example, the resonant frequency is that of tilting about axis 116. In principal, however, other modes and other resonant frequencies may be similarly used.

At a higher frequency f_{2R1} near the resonant frequency of inner scan plate 112 in rotation, a corresponding phenomenon may be observed as may be seen from inspection of curve 1702 of Figure 20. At a frequency below but approaching the resonance frequency of the inner scan plate 112 in rotation, a local minimum is observed in curve 1702. Continuing higher in frequency, the tilting response of the gimbal ring then increases to reach a local maximum near the resonant frequency of rotation of the inner scan plate 112, f_{2R1}. At this point, as indicated by arrow 1808, energy is transferred to the inner plate to create a maximum in its displacement amplitude. In the case of present example, this displacement amplitude is exhibited as rotation about axis 116 of the inner scan plate 112 relative to the gimbal ring 106.

Whereas the coupling between curves 1702 and 1804 was in phase at resonance frequency f_{1R2}, the coupling at f_{2R1} is out of phase. That is, when scan plate 112 is rotated clockwise by an amount corresponding to the displacement amplitude of curve 1802, the gimbal ring is tilted counterclockwise by an amount corresponding to the displacement amplitude of curve 1702. Thus, while the curves 1702 and 1802 resulted in additive displacement of the mirror surface at frequency f_{1R2}, the direction of displacement of curve 1702 at frequency f_{2R1} is in opposition to the direction of displacement of curve 1802.

Figure 21 shows the theoretical frequency response curves on a dB scale of a real system according to the differential equations describing the system of Figure 19 shown above. The amplitudes are absolute values calculated relative to an external fixed reference frame. At frequency f_{2R1}, the scan plate scan amplitude is 7 , while the gimbal ring oscillation amplitude is 2 . The angles of the two bodies have approximately 180 relative phase at f_{2R1}.

While driving the system at a point corresponding to the local minimum of curve 1702 would result in a higher effective ratio of (mirror amplitude response to gimbal ring amplitude response) mechanical amplification factors, he response of the inner scan plate was not sufficient to generate an acceptable scan angle.

Another candidate frequency for driving the system corresponds to f_{1R2}, where the responses of the gimbal ring and the inner scan plate are approximately in-phase relative to one another. At this frequency (about 1700 hertz) the system exhibited its highest response of 25° and 20° respectively for curves 1802 and 1702. However, the horizontal scan rate (i.e. about 1700 hertz) was not sufficient to meet other system requirements.

While the examples discussed herein have related to scanning phenomena, and particularly rotation of an inner scan plate suspended by an outer gimbal ring exhibiting tilting, other types of motion may be similarly coupled. Various modes of oscillation as are known to the art may be useful in a variety of applications. For example vertical translation may be used by a variety of systems, including optical focusing applications, range finding applications, or other embodiments were such motion is desired. Similarly, in-plane rotation, plate (vibrational) modes, and in-plane translation may be mechanically coupled to drive a scan plate through resonance. Additionally, similar phenomena may be noted with respect to coupled actuators such as the example of Figure 1, multiply coupled bodies such as the example of Figure 5, and with respect to parallel primary oscillatory axes such as the example of Figure 5 (where induced bodies 106 and 512 both rotate about axis 110).

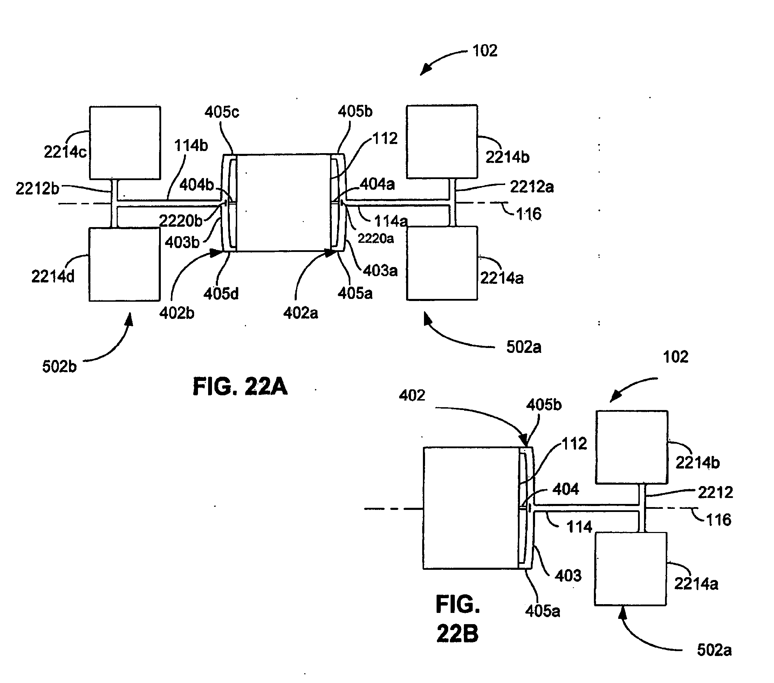

Figure 22A illustrates an embodiment of a high performance MEMS scanner 102. As described above, MEMS scanner 102 may be used in a variety of applications, including for instance, a high speed, high resolution laser beam printer, a high-speed bar code scanner, a scanned beam display, a LIDAR system, a scanned laser level, and other applications. MEMS scanner 102 is photolithographically formed from single-crystal silicon using bulk micromachining as is known to the art. A scan plate 112 having a mirror surface 113 (not shown) is coupled to a pair of torsion arms 114a, 114b through respective suspensions 402a, 402b; the suspensions consisting of suspension beams 403a, 403b, suspension center connectors 404a, 404b, and suspension outer connectors 405a, 405b, 405c, 405d as indicated. Torsion arms 114a, 114b define a rotational axis 116 about which scan plate 112 and suspensions 402a, 402b rotate. The suspensions help to keep the mirror surface relatively flat, typically within ¼ wavelength, by spreading the torque loads induced by the torsion arms 114a, 114b across the surface of the scan plate 112.

Suspensions 402 include suspension beams 403 that are each coupled to scan plate 112 by respective outer (lateral) connectors 405a, 405b, 405c, 405d and respective axial connectors 404a, 404b. Taken together, suspension elements 403a, 405a, 405b, and 404a form a first suspension coupling between first torsion arm 114a and scan plate 112. Similarly suspension elements 403b, 405c, 405d, and 404b form a second suspension coupling between second torsion arm 114b and scan plate 112.

Torsion arms 114a, 114b terminate at respective "leverage members" 2212a and 2212b. Leverage members 2212a and 2212b, in turn connect to respective mounting pads 2214a, 2214b and 2214c, 2214d at respective lateral points as illustrated. Taken together, leverage member 2212a and mounting pads 2214a, 2214b constitute a first mounting structure 502a for coupling torsion arm 114a to a support structure (not shown). Similarly, leverage member 2212b and mounting pads 2214c, 2214d form a second mounting structure 502b for coupling torsion arm 114b to a support structure (not shown). In alternative embodiments, mounting structures can take other forms, including for example a pair of rectangular mounting pads, each joined directly to a respective torsion arm (as illustrated by Figures 5, 8, and 9), a single frame formed peripheral to the scan plate 112 and torsion arms 114a, 114b (as illustrated by Figures 1, 3A, and 4A), or other forms. The exemplary embodiment of Figure 22A may have certain advantages such as, for example, packing more devices per wafer, having reduced dynamic stress, allowing individual mounting pads to be coupled to actuators, and allowing the mounting pads 2214 to "float" relative to one another, thereby reducing residual stresses in the MEMS scanner.

In an alternative embodiment, the leverage members 2212a and 2212b join to a peripheral mounting frame at lateral points, the peripheral frame surrounding the scan plate, optional suspensions, torsion arms, and optional leverage members according to a conventional MEMS arrangement.

Scan plate 112 and the mirror 113 thereon may be formed, for example, to have a lateral extent (in the direction perpendicular to the axis of rotation 116) that is substantially greater than its longitudinal extent (in the direction parallel to the axis of rotation 116). Among other considerations, this may be used advantageously to mimic the facet of a rotating polygon mirror, thus aiding in the use of scanner 102 as a replacement for a rotating polygon scanner in a variety of applications. Alternatively, scan plate 112 may be formed as a lower aspect ratio rectangle, square, circle, ellipse, or other shape as may be appropriate for a given application.

As illustrated in Figure 22A, MEMS scanner 102 includes two torsion arms 114a, 114b, each 18.76 millimeters long (including fillets), terminated on their proximal ends by a 400 micron by 200 micron elliptical fillet at respective suspensions (in particular at suspension beams 403a, 403b), and terminated on their distal ends at respective leverage members 2212a, 2212b, again with a 400 micron by 200 micron elliptical fillet. The torsion arms 114a, 114b are 384 microns wide. As with the rest of MEMS scanner 102, the torsion arms are etched to a full wafer thickness of 700 microns using DRIE processing. For a given mirror mass, the width, depth, and length of the torsion arms and leverage members may be adjusted to produce alternative resonant scan frequencies and angles.

The suspension beams 403a, 403b are 396 microns wide and are slightly bent to make a slightly obtuse angle with respective torsion arms 114a, 114b of 91.6 degrees, and extend laterally to an extent equal to the lateral extent of the_scan plate 112. Respective suspension center connectors 404a, 404b extend from the centerlines of suspension beams 403a, 403b to the centerline of the scan plate 112, a distance of 500 microns (including fillets). The center connectors 404a, 404b are each 164 microns wide and include 100 micron radius fillets at both ends. Four suspension outer connectors 405a, 405b, 405c, and 405d extend from the ends of suspension beams 403a, 403b to the scan plate 112, one on each end of each suspension beam as indicated. The outer connectors 405a, 405b, 405c, 405d are each 250 microns wide (laterally) by 400 microns long (longitudinally) and do not have fillets. The respective suspensions thus each include a suspension beam 403, a center suspension connector 404, and two outer suspension connectors 405; and connect the torsion arms 114a, 114b to the scan plate 112 in a manner that reduces stress concentrations, spreads the torque load, and reduces dynamic deformation of the scan plate during operation. Alternative suspension configurations are possible and could, as described above, be implemented by one skilled in the art.

The scan plate of the exemplary embodiment of Figure 22A is 6 millimeters by 6 millimeters square.

The leverage members 2212a, 2212b are each 1.8 millimeters long (total lateral dimension inclusive of fillets) by 400 microns wide (longitudinal dimension) and, for the example of Figure 22A, extend symmetrically from and perpendicular to the axis formed by torsion arms 114a, 114b. The outer ends of leverage members 2212a, 2212b connect to four respective mounting pads 2214a, 2214b, 2214c, 2214d with 200 micron radius fillets as shown. The mounting pads are each 5 millimeters square.

Doped channels are formed at 2220a and 2220b and on the mounting pads 2214a, 2214b, 2214c, and 2214d. Metal is deposited on mounting pads 2214a, 2214b, 2214c, and 2214d, superjacent to the doped channels. Metal is also deposited on the scan plate 112 and extending over center suspension connectors 404a, 404b, to points overlapping doped channels 2220a and 2220b. As will be described below, the doped channels form regions of relatively low and graded resistivity that help current to flow between non-metallized regions and the metal layers. The metal, which may be for example gold or aluminum, forms a mirror surface on scan plate 112.

The geometry of the leverage members may be varied considerably. Similarly, mounting pad geometries, including size, shape, and direction of connection with the leverage members connect, may be adjusted to suit application requirements. Additionally, leverage members, mounting pads, and other parts of the MEMS scanner 102 may be formed asymmetrically according to application requirements. For example, as will be seen in conjunction with Figure 22B, an entire set of two mounting pads, two leverage members and one torsion arm may be deleted.

The geometries of the scan plate 112, suspensions (corresponding to elements 403a, 405a, 405b, 404a and 403b, 405c, 405d, 404b, respectively) and torsion arms 114a and 114b may similarly be varied considerably. For example, if a 4 millimeter by 4 millimeter scan plate 112 is substituted for the 6 millimeter by 6 millimeter scan plate of Figure 22A, the torsion arm lengths may be shortened by 12 millimeters each, while maintaining approximately constant resonant frequency and material stress limits. Suspensions may also be varied considerably while still providing the advantage of reducing scan plate dynamic deformation.

When mounting pads 2214a, 2214b, 2214c, and 2214d (or alternative peripheral frame) are mounted to a housing, periodic application of power to an actuator (not shown) will cause scan plate 112 to periodically rotate back and forth about the axis of rotation 116 defined by torsion arms 114a, 114b. For one embodiment, when driven with an appropriate signal (such as a 5 kilohertz (KHz) sine wave varying between about 0 (zero) and 25-30 volts for a four-actuator embodiment) the scan plate 112 responds with a ± 20° mechanical scan angle at a frequency of 5 KHz.

At a mechanical scan angle of ± 20°, the scanner 102 exhibits a scan angle approximately equivalent to a nine-sided rotating polygon. Other scan angles may be chosen to match other polygon shapes. At a full period scan rate of 5 KHz, scanner 102 produces bidirectional scans (one forward and one reverse scan during each cycle) at a rate of 10 KHz. This is approximately equivalent to a nine-sided polygon mirror rotating at 66,667 RPM. Thus, scanner 102 can achieve the scanning performance of a relatively sophisticated rotating polygon scanner, making it suitable for high speed applications. Alternatively, the scanner may be used to scan unidirectionally, making it approximately equivalent to a 33,333 RPM nine-sided rotating polygon scanner. Unidirectional operation is achieved simply by modulating image data (or capturing image data) only when the mirror is in one of the forward or reverse scan half-cycles. When used bi-directionally, suitable control electronics are used to reverse the data read-out (to the laser or from the detector) during reverse scans.

Figure 22B illustrates an alternative embodiment of a MEMS scanner 102. A single torsion arm supports a scan plate 112 through a suspension as described in conjunction with Figure 22A. The scan plate may be rotated around axis 116 by properly controlling the resonant frequencies of various modes and/or by driving the scan plate at or very near its resonant frequency, as will be described below.

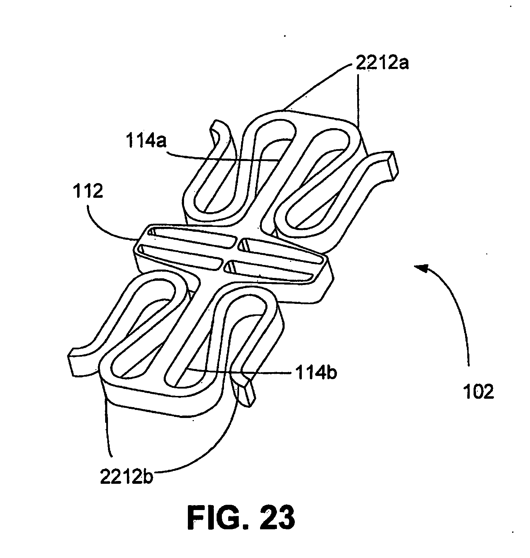

Figure 23 illustrates another alternative embodiment of a MEMS scanner 102. In the exemplary embodiment of Figure 23, the leverage members 2212a and 2212b are formed in a serpentine shape. The distal ends of the leverage members would typically join to mounting pads as illustrated above, or alternatively to a peripheral frame member. As may be appreciated, the geometry of the leverage members may be altered substantially.

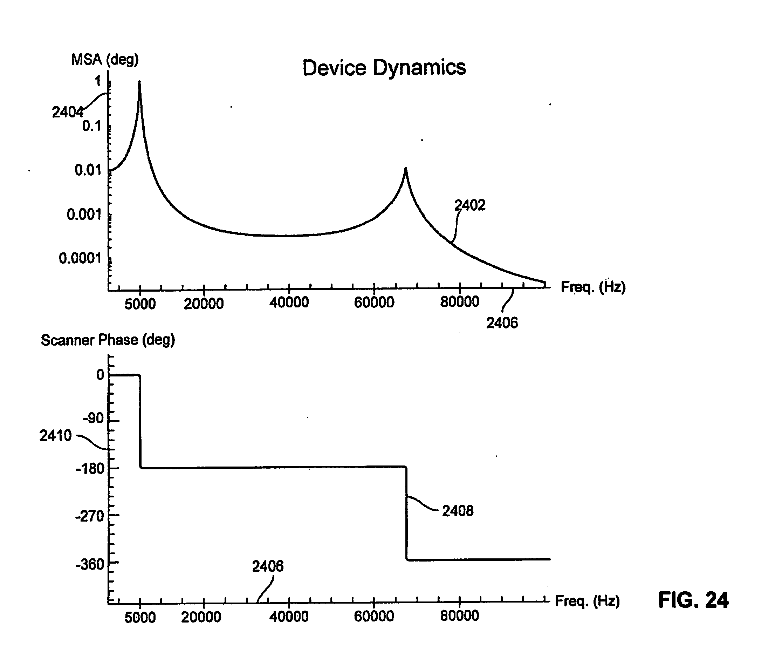

Figure 24 shows graphs illustrating the dynamic response of the MEMS scanner of Figure 22A when a periodic drive signal is applied. Curve 2402 indicates an amplitude response 2404 as a function of periodic drive frequency 2406. Curve 2408 illustrates scanner vs. drive phase 2410 plotted against the same periodic drive frequency axis 2406. From inspection of curve 2402, one can see a peak in response at about 5 KHz, corresponding to the resonance frequency of the MEMS scanner in the rotation mode. While the size of the peak is plotted on a relative basis, it is, for the exemplary embodiment, sufficiently high to produce a resonant response of ± 20° mechanical scan angle at acceptable drive power. For a four-actuator embodiment, a drive waveform approximating a 5 KHz sine wave with amplitude of 0 (zero) to 25-30 volts results in ±20° mechanical scan angle.

The secondary peak at between 65 and 70 KHz corresponds to the resonant behavior of the piezo-electric stack actuators.

Curve 2408 illustrates how the phase relationship of the drive signal to the MEMS scanner response inverts at the resonance points. Below 5 KHz, the phase relationship (drive to response) is 0°. Above 5 KHz but below the secondary peak, the phase relationship is -180°. At the primary resonant peak, the phase relationship inverts and passes through -90° (response lagging drive) as indicated. Above the secondary peak, the response of the system drops and the phase response again inverts, passing from -180° below the peak, through -270°(+90°) at the secondary resonance peak, to -360° (0°) at frequencies above the secondary resonance peak. To maximize efficiency, it has been found to be advantageous to operate the MEMS scanner at or very near the primary resonance peak.

For operation at 5 KHz, the resonant frequency of the MEMS scanner is trimmed to be a few hertz above 5 KHz, typically in the range of 5.001 to 5.005 KHz at room temperature. Such trimming may be accomplished using methods described in U.S. Patent Number 6,245,590, entitled FREQUENCY TUNABLE RESONANT SCANNER AND METHOD OF MAKING, commonly assigned herewith. It has been found to be advantageous to factory trim the resonant frequency using a method of adding weight to the scan plate in the form of a small quantity of epoxy. Active thermal tuning of the resonant frequency is used to make the resonant frequency substantially 5.000 KHz.

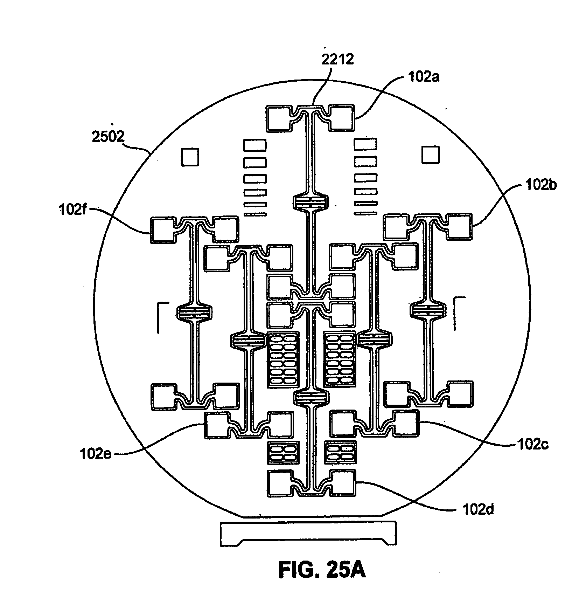

Figure 25A illustrates a prototypical layout of MEMS scanners 102a, 102b, 102c, 102d, 102e, and 102f on a 100 millimeter silicon wafer 2502. As may be seen, the MEMS scanners are densely packed with interdigitated mounting pads and mirrors. One reason for such a layout is to maximize yield per wafer. As may be seen the scan plates of scanners 102 shown in Figure 25A are formed in a short and wide aspect ratio. Figure 25A further illustrates an alternate leverage member 2212 design wherein the ends of the "T" are offset toward the mirror.

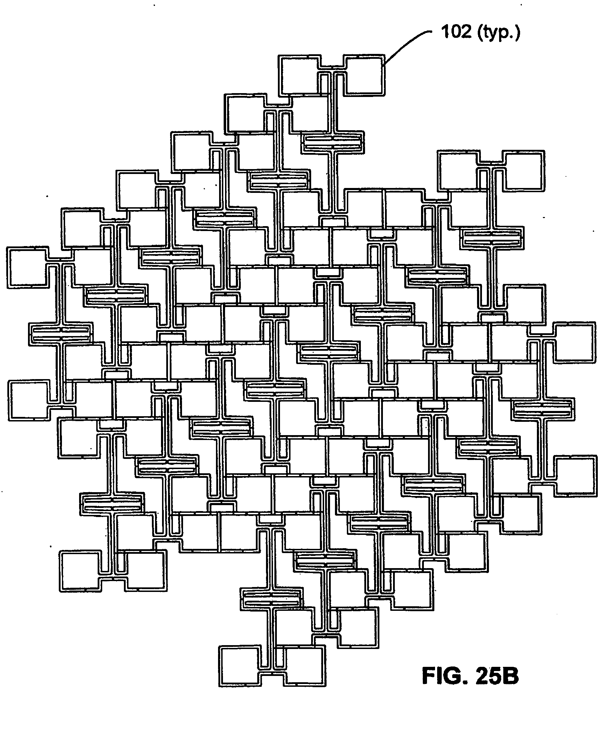

Figure 25B illustrates an alternative layout of MEMS scanners for fabrication from a 100 millimeter silicon wafer. The dimensions of the scanners, particularly the length of the torsion arms, has been adjusted for more efficient interdigitated packing compared to the layout of Figure 25A. Larger wafers may also be densely packed with devices.

The term "interdigitated" means that it would not be possible to draw a square around or dice around one semiconductor device without cutting off a portion of one or more neighboring semiconductor devices. That is, one or more neighboring semiconductor devices intrudes into the outline of a geometric shape that could be formed around the semiconductor device using a dicing saw. An etching step such as deep reactive ion etch (DRIE) or other process step is used to almost completely release the scanners from the wafer. The double lines formed around each device indicate the edges of a "moat" formed around the device. Very fine silicon "bridges" may be seen connecting the scanners to the wafer at intervals. To release the scanners, these bridges are simply broken and the scanners popped out. The width of the bridges is set narrow enough to usually avoid propagating a crack across the device.

In an alternative embodiment, a layer of metal is plated, or an insulator wafer is bonded, on the back surface of the silicon wafer prior to DRIE. DRIE is used to etch through the silicon wafer. The layer of metal or insulator may then hold the scanners in the wafer. The metal may be torn to remove the scanners. Alternatively, the metal or the insulator may be etched away to free the parts. In one embodiment, aluminum is used for the metal stabilization layer. In one embodiment, PYREX glass is used for the insulator stabilization layer. When such stabilization layers are used, silicon bridges may be used in combination to hold the shapes in place. Alternatively, the silicon bridges may be eliminated.

Fabrication of a MEMS scanner 102, according to some embodiments may include the formation of a doped channel or charge carrier layer as described above. Phosphorus-doped silicon wafers having a bulk resistivity of 1-10 ohm-cm are used. The phosphorous-doped silicon wafers are implanted at a dose of 5 x 10¹⁵ phosphorus 31 atoms/cm² accelerated through 30 KeV at a maximum current of 4 mA. The dose of phosphorus is driven for 45 minutes at 1000°C. The resulting doped channel is heavily doped to a depth of about 0.5 microns forming a graded channel wherein the doping concentration and resultant resistivity vary with depth. For these conditions, the wafer surface has a doping concentration of about 1 x 10²⁰ phosphorus 31 atoms / cm³, yielding a resistivity of about 0.001 ohm-cm, which falls to the wafer background of about 1 x 10¹⁵ atoms/cm³ (or 1-10 ohm-cm) at a depth of 0.5 microns.

The doped channel creates a conduit for charge carriers to move from the metal layers into the silicon. As will be described below, current may be applied to the MEMS scanner 102 to create joule heating. For the exemplary embodiment of the scanner of Figure 22A, for example, mounting pads 2214a, 2214b may be driven to a positive voltage by a heater amplifier. Heater leads may couple to mounting assemblies and/or to a metallized layer on the mounting pads themselves. According to an exemplary embodiment, current flows along a metal layer that covers mounting pads 2214a, 2214b and moves into the silicon via the doped channels formed subjacent the metal. Current then flows within the silicon through leverage member 2212a and torsion arm 114a, thus forming localized heating primarily in the torsion arm 114a. (Because the current flow is split along both arms of leverage member 2212a, there is reduced joule heating within the leverage member.) Where torsion arm 114a meets doped channel 2220a, current flows from the silicon and up into the metal layer formed overlapping doped channel 2220a. Current flows across center suspension connector 404a, across the metal of the mirror 113 formed on scan plate 112, and across center suspension connector 404b, thus avoiding joule heating within those structures. Where the metal layer overlaps doped channel 2220b, current flows down from the metal into the silicon. Current flows through the torsion arm 114b and leverage member 2212b, again causing joule heating (primarily within the torsion arm). Current then flows through the doped channels formed on mounting pads 2214c, 2214d, and up into the metal layers formed thereon where it is collected by a second set of heater leads held near ground. As is known to the art, hole movement in the direction indicated or electron movement in the opposite direction may form such current flow.

In some cases, an advantageous aspect of the scanner designs exemplified by Figures 22A, 22B, 23, 25A and 25B is that a minimal number of process steps may used in fabrication. The scanners may be formed throughout from a full thickness of silicon wafer with no partial etching to reduce thickness of areas or produce raised ribs. A pattern of metallization corresponding to mirrors is formed on the front of wafer 2502. According to one embodiment, gold metallization is used for the mirrors. Back metallization is formed on the back of wafer 2502. According to one embodiment, aluminum is used for the back metallization layer. Next, a photoresist pattern corresponding to the semiconductor devices and the non-etched areas therebetween is formed on the front of the wafer, and the exposed areas are deep etched. In one embodiment, DRIE is used to etch vertical walls through the wafer. The back of the wafer is cryogenically cooled during etching and the high thermal conductivity of the aluminum back metallization stops the DRIE etch when it gets to the back surface of the silicon wafer. In some embodiments, the scanner shapes are held in the wafer by the thin aluminum layer bridging the back of the etched outlines. In other embodiments, thin bridges of silicon help to hold the parts in place. The aluminum back metallization is etched away and the photoresist is removed. The scanners are then free or, if silicon bridges are used, may be removed from the wafer and singulated by breaking the bridges across the deep-etched areas. Dicing may be avoided by using deep-etching to release the parts.

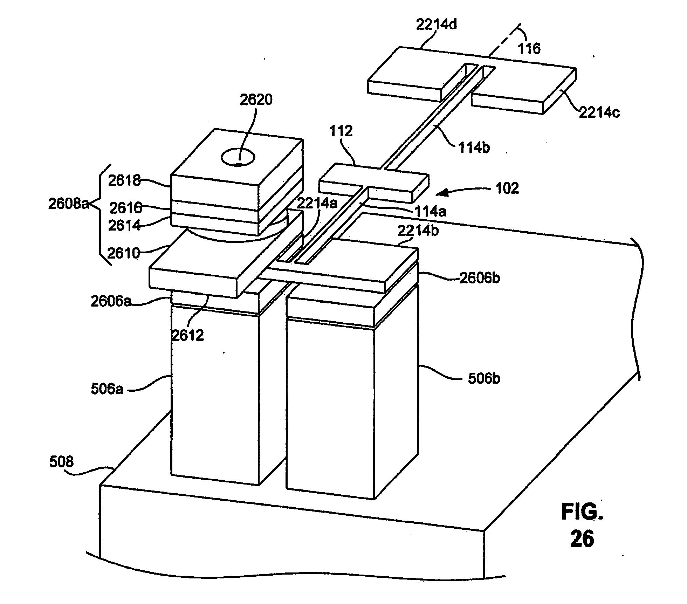

Figure 26 illustrates an actuator arrangement for the MEMS scanner. A pair of commercially-available piezo-electric stacks 506a and 506b, set upon a common mounting base 508, support respective mounting pads 2214a, 2214b of MEMS scanner 102 through respective first insulators 2606a, 2606b. From their respective positions, the piezo-electric stacks 506a, 506b may be alternately electrically compressed and expanded to produce a periodic rotation of the mounting pads 2214a, 2214b about the axis of rotation 116 defined by torsion arms 114a, 114b. Similarly, common mode activation of the piezo-electric stacks 506a, 506b may be used to rotate the MEMS scanner 102 about a transverse axis substantially parallel to the transverse axis of the scan plate 112.

To maintain contact between the MEMS scanner 102 and the piezo-electric actuator stacks 506a, 506b, respective clamps or pressure assemblies 2608a and 2608b (2608b not shown) press the mounting pads 2214a, 2214b down against the actuator stacks. Clamp 2608b is omitted from Figure 26 for clarity. As shown, clamps 2608 include (starting from the bottom of the assembly and contacting the mounting pad 2214) a first pressure plate 2610, an optional series disk spring 2612, a second pressure plate 2614, a second insulator 2616, and a third pressure plate 2618. In one embodiment, an edge of first pressure plate 2601 is extended out from the pressure assembly as shown. As will be explained below, this provides an optional bonding position for a heater wire or lead. Series disk spring 2612 is of a commercially available type such as SPRINGMASTERS #D63203 and is selected to have relatively low stiffness but high (>>5 KHz) intrinsic resonant frequency. A series of two springs, a different number of springs, or no springs at all may be used, depending upon application requirements. First and second pressure plates 2610 and 2614 provide robust surfaces for series disk spring 2612 to press against. Second insulator 2616 provides for electrical insulation of the MEMS scanner 102. First and second insulators 2606, 2616 are formed from a material with appropriate density, electrical insulating ability, and compressive strength such as PYREX glass. First and second pressure plates 2610, 2614 are formed from materials that are suitably electrically conductive and have appropriate physical properties including compressive strength, toughness, and density, such as steel. Third pressure plate 2618 provides a mounting surface for second insulator 2616 and connects the assembly to a housing (not shown). Third pressure plate 2618, preferably formed from steel, includes a bore 2620 for receiving a mounting and adjustment screw (not shown). As may be appreciated by those skilled in the art, alternative or modified clamps may be used.

In an alternative embodiment, it has been found that the series disk spring 2612 may be omitted from the pressure assemblies 2608. Such a modification may offer advantages with respect to assembly ease and cost, but may hurt drive efficiency somewhat.

One or more components of the pressure assemblies 2608 may optionally be keyed to a housing or otherwise held in a substantially fixed rotational relationship. This reduces or eliminates torque loads transmitted through the assemblies during adjustment of the mounting and adjustment screw. By substantially reducing or eliminating torque loads through the pressure assemblies 2608, substantially zero torque load is applied to the mounting pads 2214 of the MEMS scanner during assembly, thus protecting the MEMS scanner 102 from inadvertent changes in resonant frequency and/or scan angle range arising from slight rotation of the mounting pads 2214.

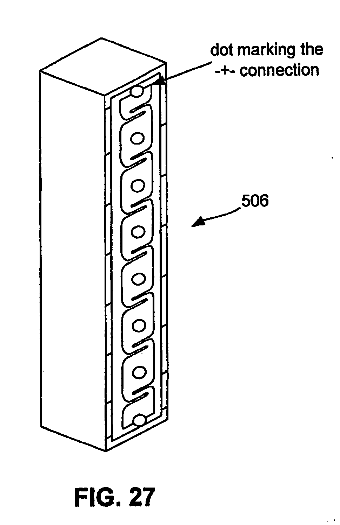

Figure 27 is a view of a piezo stack actuator 506. Such actuators are available form several sources including http://www.physikinstrumente.de model PICMA 885.10.

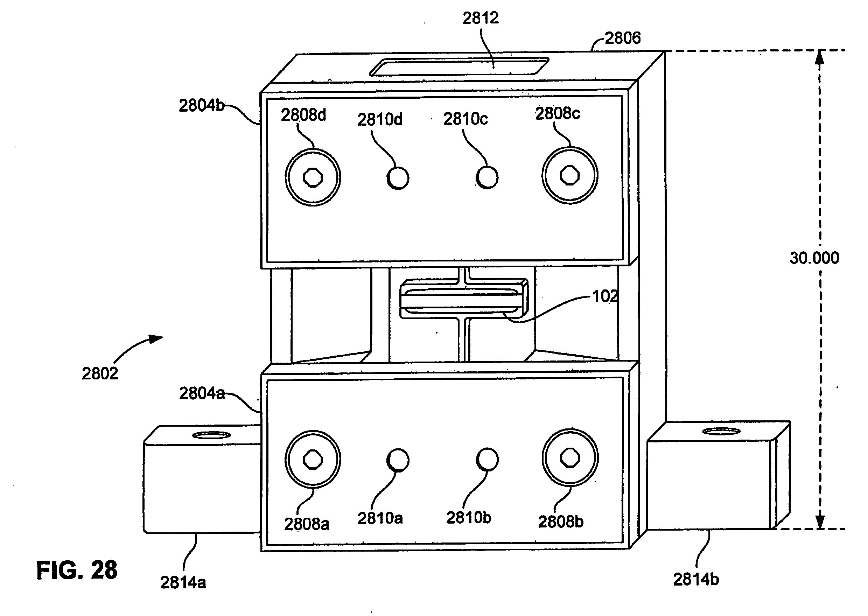

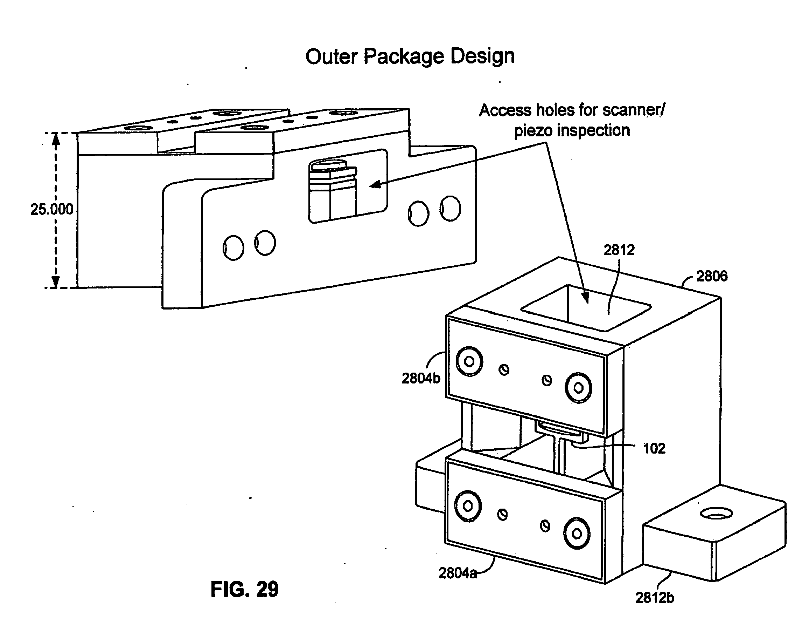

Figures 28 and 29 are views of a MEMS scanner housing 2802 for use in a laser beam printer, bar code scanner, LIDAR, scanned laser level, etc. Two front plates 2804a, 2804b are fastened to a rear housing 2806 with mounting screws 2808a, 2808b, 2808c, 2808d. MEMS scanner 102 is held in a cavity therein that allows for an appropriate amount of rotation. Threaded adjustment screw holes 2810a, 2810b, 2810c, and 2810d receive adjustment screws (not shown) that protrude into corresponding adjustment screw receiving bores 2620 (shown in Figure 26). During assembly, adjustment screws are turned to provide an appropriate amount of preload on series disk spring 2612 (not shown). Behavior of the MEMS scanner under actuation can be observed through MEMS observation port 2812, formed in the top of rear housing 2806. The MEMS scanner assembly 2802 is secured to the exposure unit of a laser beam printer or other apparatus via mounting tabs 2814a, 2814b formed in housing 2806.

The use of clamps 2608 to secure the MEMS scanner 102 in housing 2802 results in a mount that "floats", allowing the mounting pads 2214 to move a bit with respect to one another. In some embodiments, slight twisting of the clamps 2608 during assembly can result in slight in-plane twisting of the mounting pads 2214. This can result in undesirable residual stress in the leverage members and/or torsion arms of the MEMS scanner. Such twisting may be reduced or eliminated by running or "burning-in" the mounted scanner for a few hours at reduced scan angle. In an exemplary embodiment, the scanner is run at half amplitude for approximately four hours. The burn-in process can reduce the occurrence of "infant" failures associated with mechanical failure of the leverage members and/or torsion arms. Alternative, reduced twist clamp assembly designs may be substituted to reduce or eliminate the need for scanner assembly burn-in.

The MEMS scanner 102 may be driven by four piezo-electric stacks 506, one subjacent each mounting pad 2214a, 2214b, 2214c, and 2214d. Alternatively, one end of the MEMS scanner may be held in a fixed position, i.e. mounting pads 2214c and 2214d may be clamped against a solid mounting point, and the other end of the MEMS scanner may be driven by piezo-electric actuators, i.e. mounting pads 2214a and 2214b may each be clamped against piezo-electric stacks as shown in Figure 26. In a third alternative, three of the mounting pads are clamped to a fixed, solid mounting point and one piezo-electric stack actuator is used. Typically, the choice hinges on cost vs. actuator power requirements. As may be appreciated, similar considerations apply to a MEMS scanner design 102 such as are presented in Figures 5, 22A, 22B or 23.

As indicated above, the MEMS scanner is trimmed to have a resonant frequency within a few hertz of the desired operational frequency. As may be appreciated from curve 2402 of Figure 24, small changes in resonant frequency can result in relatively substantial changes in rotation amplitude (for a given periodic actuation voltage). The inventors have discovered that controlled heating of the MEMS device further trims the resonance frequency, and hence the actuation amplitude, even though in the exemplary embodiment the MEMS scanner has no outer frame. Referring back to Figure 26, the extended tab on the first pressure plate 2610 of clamp 2608a receives a heater wire as does the corresponding pressure plate of clamp 2608b (not shown). Similarly, corresponding pressure plates adjacent mounting pads 2214c and 2214d (also not shown) also receive heater wires. The heater wires may be attached by soldering to the gold plated extended tab of first pressure plate 2610, or by soldering to metallized silicon bond pad formed, for example, on the mounting pads 2214, or by other methods as will be apparent to those skilled in the art.

When both mounting pads or clamps at one end of the MEMS scanner have a heater lead attached, it is preferable to hold such neighboring leads at the same electrical potential to avoid current flow therebetween. In contrast, the heater lead or leads at the opposite end of the MEMS scanner may be driven to a different voltage to create current flow along and through the torsion arms.

In use, the scan amplitude is monitored by sensors and the electric potential between the two ends of scanner 102 (mounting pads 2214a and 2214b forming one such end and mounting pads 2214c and 2214d forming the other end) is adjusted. Resistance of the silicon material itself and the doped channel described above to current flow, and particularly the torsion arms 114a, 114b, causes heating. Higher temperatures cause a "softening" of the torsion arms and a corresponding reduction in resonant frequency. Thus, when the resonant frequency is above the periodic drive signal frequency, heating may be increased to raise the temperature of the MEMS scanner, thereby trimming the resonant frequency to match the drive signal frequency. Similarly, when the resonant frequency of the MEMS scanner falls to be below the drive signal frequency, heating may be reduced, thus cooling the device and raising its resonant frequency to match the drive signal frequency. In alternative embodiments, thermal trimming may be used to change the scan amplitude even when, for a given system design, the scanner is not operated precisely at its resonant frequency.

It has been experimentally determined that 0 to 1.5 W of tuning power can provide a resonant frequency tuning range of about 8 Hz. This range may be somewhat lower at higher scanning frequencies and somewhat higher at lower scanning frequencies, presumably as a result of airflow over the scanner providing cooling during operation.

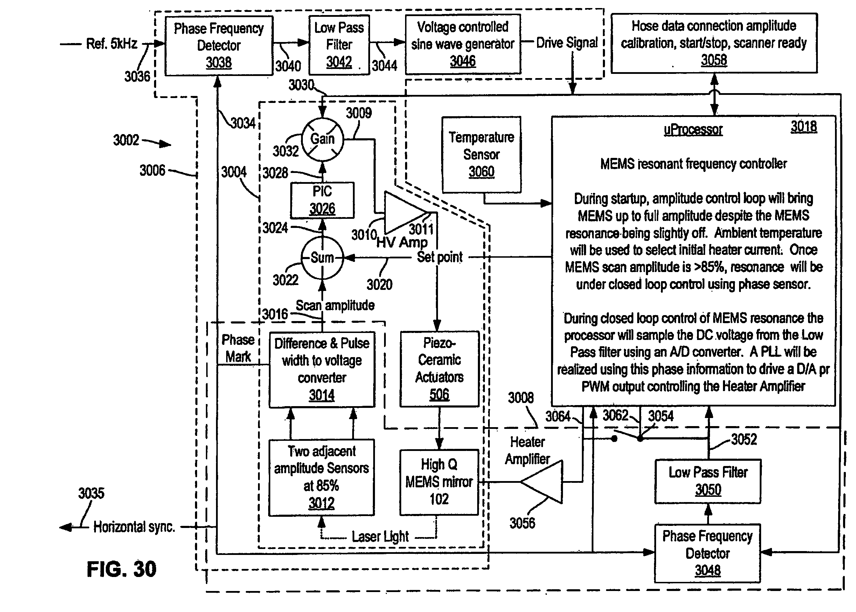

Turning now to Figure 30, a block diagram showing a control system 3002 for driving a MEMS scanner is shown. For many applications, it is advantageous to precisely control the phase and amplitude of scanning of a MEMS scanner. Scanned beam applications including bar code scanners, laser cameras, scanned beam displays, electrophotographic printers and others, can benefit from precise control of MEMS scanner phase and/or amplitude.

Similarly, precise control of scanner resonant frequency can minimize power consumption, and perhaps even make feasible certain applications, by allowing operation of the scanner at its resonant frequency, rather than somewhat off resonance as has heretofore been typical practice.

The block diagram of a control system 3002 of Figure 30 includes three overlapping servo loops for driving and controlling a MEMS scanner; an amplitude control servo loop 3004, a phase control servo loop 3006, and a resonance frequency control servo loop 3008, outlined by respective medium, short, and long dashed lines as indicated.

Turning first to the amplitude control loop 3004, low voltage drive signal 3009 is amplified by a high voltage amplifier 3010 produces a periodic high voltage drive signal 3011 that drives one or more actuators, in the form of piezo-electric driver stacks 506, to induce periodic oscillations in a resonant MEMS scan mirror 102. As will be appreciated, alternative actuator technologies, such as magnetic, electrostatic, thermal, and other types of actuators could be substituted for piezo-electric actuators 506.

A variety of technologies can be used to monitor the phase, amplitude, position, and/or speed of MEMS scan mirror 102. In the exemplary embodiment, the light beam deflected by the mirror includes approximately 20% overscan, the edge of the imaging region thus ending at 80% scan. An optical detector 3012, comprising a pair of adjacent sensor areas is positioned with its center point (the center of the region between the sensor areas) at 85% of the scan range. The output from one sensor area is subtracted from the output of the other sensor area by converter 3014. Converter 3014 is a difference and pulse-width-to-voltage converter that outputs a negative voltage proportional to the amount of time the beam is beyond the central 85% of scan range as scan amplitude signal 3016.

A microprocessor 3018 sets an amplitude set point voltage signal 3020 that is added to scan amplitude signal 3016 in adder 3022, to produce raw amplitude error signal 3024. Thus, if the scan amplitude is greater than desired, the absolute magnitude of the negative scan amplitude signal 3016 will be greater than the absolute magnitude of the set point signal 3020, and the raw amplitude error signal 3024 will be a negative number. Conversely, if the scan amplitude is less than desired, the absolute magnitude of the negative scan amplitude signal 3016 will be less than the absolute magnitude of the set point signal 3020, and the raw amplitude error signal 3024 will be a positive number.

Raw amplitude error signal 3024 is fed to proportional integral controller (PIC) 3026. PIC 3026 produces conditioned amplitude error signal 3028. PIC 3026 acts to dampen the system response to fluctuations in scan amplitude. It averages variations in raw amplitude error signal 3024 voltages and acts to control the rate at which changes in amplitude error are fed back to affect the high voltage drive signal, thereby improving stability and performance of the amplitude control servo loop 3004.

Raw drive signal 3030 a periodic, low voltage signal that is the nominal phase-corrected signal for driving the MEMS scanner. Raw drive signal 3030 is received and is multiplied by gain circuit 3032 to produce low voltage drive signal 3009. Thus, if the amplitude of the MEMS scanner 102 is measured to be too low, conditioned amplitude error signal 3028 is a relatively high voltage that, when multiplied by raw drive signal 3030 in gain circuit 3032 produces a relatively large amplitude low voltage drive signal 3009. If the amplitude of the MEMS scanner is measured to be too high, conditioned amplitude error signal 3028 is a relatively low voltage that, when multiplied by raw drive signal 3030 in gain circuit 3032 produces a relatively low amplitude low voltage drive signal 3009. Either case thereby serves to bring the scan amplitude back to a desired value set by the microprocessor 3018 as set point voltage signal 3020.

Phase control servo loop 3006 operates as a phase locked loop. Converter 3014, described above in conjunction with amplitude control servo loop 3004, produces phase mark signal 3034 that is also passed back to the host controller as horizontal synchronization signal 3035. Phase mark signal 3034 is generated from the subtracted detector pair signals using one edge, i.e. one scan direction. Like edges of reference signal 3036 and phase mark signal 3034 are compared by first phase frequency detector 3038. First phase frequency detector 3038 produces periodic spikes on raw phase error signal 3040, the width of the spikes being proportional to phase error, and the sign of the spikes indicating whether the phase mark signal 3034 is early or late with respect to reference signal 3036.

First low pass filter 3042 converts the periodic spikes on raw phase error signal 3040 to a dc voltage as first conditioned phase error signal 3044. First low pass filter 3042 sets first conditioned phase error signal 3044 to a relatively low value if the phase mark 3034 is early relative to reference signal 3036. Conversely, first low pass filter 3042 sets first conditioned phase error signal 3044 to a relatively high value if the phase mark 3034 is late relative to reference signal 3036.

First conditioned phase error signal 3044 is passed to a voltage controlled drive waveform generator 3046. The voltage of first conditioned phase error signal 3044 determines the frequency of the raw drive signal 3030 output by the voltage controlled drive waveform generator 3046.

Thus, if a phase mark signal 3034 is early relative to reference signal 3036, the first phase frequency detector 3038 outputs a negative spike on raw phase error signal 3040, the width of the spike being proportional to the magnitude of the error between the phase mark signal 3034 and the reference signal 3036; a series of negative spikes on raw phase error signal 3040 drives first low pass filter 3042 to output a relatively low voltage on first conditioned phase error signal 3044, the voltage being moderately low if the spike widths on raw phase error signal 3040 are narrow and the voltage being more extreme (lower) if the spike widths are wider; a low voltage on first conditioned phase error signal 3044 causes voltage controlled drive waveform generator 3046 to output a lower frequency raw drive signal 3030, small deviations in phase (moderately low voltage on first conditioned phase error signal 3044) causing moderate decreases in frequency and relatively larger deviations in phase (lower voltage on first conditioned phase error signal 3044) causing larger decreases in frequency; the lower frequency serves to retard the phase of the MEMS mirror, causing phase mark signal 3034 to be output somewhat later, thereby bringing phase mark signal 3034 back into synchronicity with reference signal 3036, and causing a phase lock to reference signal 3036.

If phase mark signal 3034 is late relative to reference signal 3036, the voltage of first conditioned phase error signal 3044 is increased, causing the drive frequency of raw drive signal 3030 to increase, and similarly bringing the phase mark signal 3034 back into synchronicity with reference signal 3036. The time constant of low pass filter 3042 serves to provide damping to the phase servo control system 3006.

Referring now to resonant frequency servo control loop 3008, the relative phases of the drive signal and the scanner response are used to adjust MEMS scanner resonant frequency. As was described above in conjunction with Figure 4, the MEMS scanner response phase varies with respect to drive phase with frequency as illustrated by curve 408. At the primary spike in scanner amplitude response curve 2402, the phase relationship between the drive signal and the scanner response rapidly inverts from in-phase (0°) below the primary resonant peak to -180° out of phase above the primary resonant peak, passing through -90° at the primary resonant peak. Resonant frequency servo control loop 3008 makes use of this change in phase response to keep the resonant response of the MEMS scanner tuned to match the drive frequency.

At its primary peak in resonant response, the MEMS device phase response to a drive signal rapidly shifts from 0° to -180°, passing through -90° at its resonance peak. While this inversion is shown as substantially instantaneous in Figure 24 (owing to the broad frequency range of the chart); the inversion actually takes place over a few Hertz. Thus, it is desirable to maintain the phase offset between the phase mark signal 3034 and the drive signal 3030 at -90°, indicating operation of the MEMS scanner at its resonance peak.

According to an exemplary embodiment, the temperature dependence of the MEMS scanner resonant frequency is used to advantage. The phase mark signal 3034 is compared to raw drive signal 3030 by second phase frequency detector 3048, which cooperates with second low pass filter 3050 to produce a second conditioned phase error signal 3052. Second phase frequency detector 3048 is set to output a nominal voltage on second conditioned phase error signal when the phase offset between the phase mark signal 3034 and the drive signal 3030 is -90°, increasing the voltage when the relative phase is between -90° and -180°, and decreasing the voltage when the relative phase is between 0° and -90°. The nominal voltage is that voltage appropriate for setting current through the MEMS scanner 102 to make the resonant frequency match the drive frequency. According to an exemplary embodiment and as described above, the MEMS scanner is trimmed during manufacturing to have a primary resonance peak a few hertz above the nominal operating frequency at room temperature. Current is then supplied by the resonance frequency servo control loop 3008 to reduce the resonance frequency of the MEMS scanner 102 to match the drive frequency 3030 as shown.

Switch 3054 is normally closed when the system is in operation (after start-up). Thus the voltage on second conditioned phase error signal 3052 is passed to heater amplifier 3056. When the relative phase between the phase mark signal 3034 and drive signal 3030 is between -90° and -180°, second phase frequency detector 3048 and second low pass filter 3050 cooperate to raise the voltage on second conditioned phase error signal 3052 proportionally to the degree of deviation from -90°. Heater amplifier 3056 is thus driven to set a voltage across MEMS mirror 102 when the phase of the mirror response lags behind the phase of the drive. Such a condition corresponds to the resonant peak of the mirror being higher than the drive frequency.

As was described above, increasing the electrical potential across the semiconductive MEMS scanner 102 leads to increased joule heating within the scanner, thus raising its temperature. Raising the temperature of the MEMS scanner 102 lowers its peak resonance frequency. Thus, when the peak resonance frequency of the MEMS scanner 102 is above the drive signal frequency, its phase tends to lag the phase of the drive signal by somewhat less than 90°, and the resonant frequency servo control loop 3008 causes an increase in temperature of the scanner, bringing the phase difference into the appropriate relationship, and thereby reducing the peak resonance frequency of the MEMS scanner 102 to match the drive signal frequency. Conversely, if the MEMS scanner 102 is heated sufficiently to lower its peak resonance frequency below the drive frequency, its phase tends to lag the drive signal by somewhat more than 90°, and the control loop reduces heater current flow, thus raising the peak resonance frequency a little to make it match the drive frequency until the phase relationship is again -90°. This control loop allows the scanner to be operated substantially at its peak resonant frequency and thus minimizes actuator power requirements.

Returning to Figure 30, microprocessor 3018 includes communication provision 3058 and includes an ambient temperature sensor 3060. It can also be seen that second conditioned phase error signal 3052 and phase mark signal 3034 are sent to microprocessor 3018 and that control lines 3062 and 3064 connect respectively with switch 3054 and heater amplifier 3056. Many or all of these features are used during system start-up.

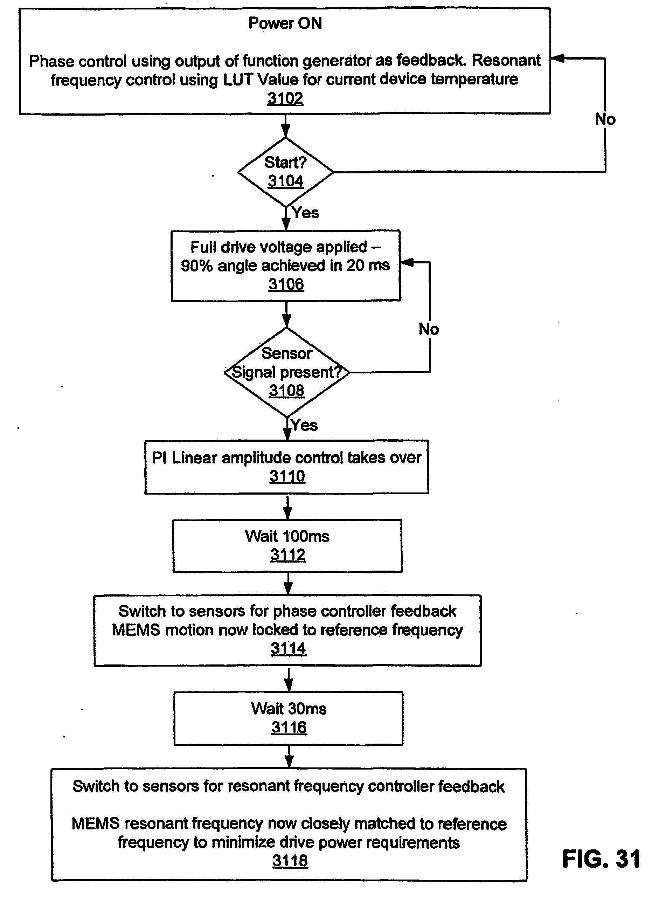

Figure 31 is a flow chart showing a start-up method used by the system 3002 shown in Figure 30. When power is on during an idle state corresponding to process 3102, the phase control loop 3006 and resonant frequency control loop 3008 are both run using simulated feedback. The microprocessor 3018 first sets a voltage on line 3044 that is sent to the voltage controlled waveform generator 3046. The raw drive signal line 3032 then serves as input to a converter (not shown) that outputs a simulated phase mark signal 3034 to the first phase frequency detector 3038. The first phase frequency detector 3038 then compares the simulated phase mark signal 3034 to the reference signal 3036, outputting a raw phase error signal 3040 to first low pass filter 3042 that, in turn, sets a voltage on conditioned phase error signal 3044. Thus the phase servo control loop 3006 continues to run independent of MEMS scanner movement and detection.

To run the resonant frequency servo control loop 3008, the microprocessor 3018 reads an ambient temperature from ambient temperature sensor 3060. The temperature sensor value is converted to a digital value that serves as an index to a resonant frequency look-up table (LUT) (not shown). The resultant resonant frequency LUT value drives a digital-to-analog converter (DAC) that outputs a synthesized resonant frequency voltage signal 3064 to drive heater amplifier 3056. As during operation, heater amplifier 3056 then sets a voltage across the MEMS scanner 102 and joule heating raises the temperature of the MEMS scanner to a temperature corresponding to the resonant frequency LUT value. In some embodiments, the resonant frequency LUT is derived for each MEMS scanner 102 as a factory calibration step by determining the scanner temperature necessary to trim its resonant frequency to a target operating frequency, for example 5 KHz. In other embodiments, the LUT can be set for a batch of MEMS scanners or for all MEMS scanners. Thus, during the idle state corresponding to process 3102, the resonant frequency servo control loop 3008 is operative to keep MEMS scanner 102 at a nominal operating temperature set to match its resonant frequency to the reference signal 3036 frequency.

As an alternative to sensing ambient temperature, temperature sensor 3060 may be thermally coupled to MEMS scanner 102 and measure its temperature.

While in the power-on idle process 3102, the microprocessor 3018 checks to determine if a start signal is received from the host controller over interface 3058, as indicated by conditional step 3104. As indicated by the "NO" decision, power-on idle process 3102 continues until a start signal is received from the host controller. When a start signal is received, the embedded software proceeds to start-up amplitude control process 3106. Upon entering start-up amplitude control process 3106, microprocessor 3018 sets low voltage drive signal 3009 to drive high voltage amplifier 3010 to produce high voltage drive signal 3011 at a maximum amplitude, thus overdriving the piezo-electric stack actuators 506. Overdriving piezo-electric stack actuators 506 results in very rapid ramp-up of scan amplitude. According to one start-up embodiment, high voltage drive signal 3011 comprises a sine wave at the reference 5 KHz frequency with an amplitude of 0 (zero) to 60 volts. In this embodiment the MEMS scanner is driven to reach approximately 90% of its nominal scan angle in only 20 milliseconds, resulting in faster system start-up than would result from applying the lower nominal steady-state drive voltage of about 0 to 20 volts.

In other embodiments, the high voltage drive signal may be set with even greater amplitude, up to near the dielectric breakdown voltage of the actuators 506. High start-up drive voltages are possible because they are only applied for a relatively short time; too short to exceed the thermal limitations of the actuators.

While in start-up amplitude control process 3106, the system looks for a stable phase mark signal 3034, as indicated by decision process 3108. A stable phase mark signal is determined by monitoring a circuit (not shown) that averages several successive phase marks to determine that they meet amplitude control servo loop 3004 requirements. Once a stable phase mark signal is present, meaning that the MEMS scanner 102 is operating at a relatively constant frequency and with sufficient amplitude that the scanned beam crosses the optical amplitude sensors 3012, the process moves to closed loop amplitude control process 3110, where scanner amplitude is controlled by the amplitude control servo loop 3004. Upon entering closed loop amplitude control process 3110, the PIC 3026 introduces changes to the drive amplitude at a rate consistent with stable operation, as discussed above.

Closed loop amplitude control process 3110 continues while the system waits to ensure system stabilization, indicated by the "wait" process 3112. According to one embodiment, the system waits 100 milliseconds before proceeding to closed loop phase control process 3114, wherein phase mark signal 3034 (produced by converter 3014) is coupled to first phase frequency detector 3038 and the synthesized phase mark signal generated from raw drive signal 3030 is decoupled). Process 3114 locks the MEMS scanner 102 frequency to the reference signal 3036 frequency, thus engaging phase control servo loop 3006 as a phase locked loop, as described above.

While closed loop phase control process 3114 proceeds, the system pauses for a time, for example 30 milliseconds, as indicated by process 3116. After wait process 3116 is completed, the system enters closed loop resonant frequency control process 3118, wherein resonant frequency servo loop 3008 is engaged. Resonant frequency servo loop 3008 is engaged by closing switch 3062 and substantially simultaneously ceasing the output of DAC signal 3064 from the microprocessor 3018. This causes second conditioned phase error signal 3052 to drive heater amplifier 3056 according to the method described above in conjunction with Figure 30.

According to an exemplary embodiment, the start-up process of Figure 31 generally results in stable operation of the scanning system within less than two seconds after receiving a start-up command from the host controller.

The preceding overview of the invention, brief description of the drawings, and detailed description describe exemplary embodiments of the present invention in a manner intended to foster ease of understanding by the reader. Other structures, methods, and equivalents may be within the scope of the invention. As such, the scope of the invention described herein shall be limited only by the claims.

## Claims

1. A MEMS device (102), comprising:
an inner plate (112) having a principal oscillatory mode at a first frequency;
an outer plate (106) having a secondary oscillatory mode at the first frequency;
a coupling (114a, 114b) between the inner plate (112) and the outer plate (106) selected to couple the first frequency secondary oscillatory mode of the outer plate (106) to the first frequency principal oscillatory mode of the inner plate (112); and
an actuator (118, 120) that is driven by a single drive signal (610), the actuator (118, 120) being operable to induce the secondary oscillatory response in the outer plate (106) at the first frequency and further being operable to drive the outer plate (106) in a non-resonant manner at a second frequency that is different from the first frequency;
a signal generator;
**characterized in that** the signal generation is adapted to provide the single drive signal (610) as a combination of a first frequency resonant signal (602) and a second frequency non-resonant signal (608).

2. The MEMS device (102) of claim 1, wherein the principal oscillatory mode of the inner plate (112) includes rotation about an axis (116) defined by the coupling (114a, 114b).

3. The MEMS device (102) of claim 2, further including a mirror surface (113) on the inner plate (112).

4. The MEMS device (102) of claim 2, wherein the outer plate (106) includes a gimbal structure.

5. The MEMS device (102) of claim 2, wherein the outer plate (106) includes an anchor structure.

6. The MEMS device (102) of claim 1, wherein the coupling (114a, 114b) includes a post.

7. The MEMS device (102) of claim 1, wherein the coupling (114a, 114b) includes a bending flexure.

8. The MEMS device (102) of claim 1, wherein the coupling (114a, 114b) includes at least one torsion arm.

9. The MEMS device (102) of claim 1, where the coupling (114a, 114b) includes a suspension (402a, 402b, 404a, 404b) to distribute the coupled first frequency oscillatory force to a plurality of locations on the inner plate (112).

10. The MEMS device (102) of claim 1, where the actuator (118, 120) includes a pair of drive coils formed on both the inner plate (112) and the outer plate (106), the pair of drive coils being connected to the single drive signal (610).

11. The MEMS device (102) of claim 1, where the actuator (118, 120) includes a single drive coil formed on the inner plate (112) and connected to the single drive signal (610).

12. The MEMS device (102) of claim 1, where the actuator (118, 120) includes a single drive coil formed on the outer plate (106) and connected to the single drive signal (610).

13. A method for driving a MEMS scanner (102), comprising the steps of:
generating a single drive signal (610) that includes frequency components at a first frequency and a second frequency; and
transmitting the single drive signal (610) to an actuator (118, 120) of an MEMS scanner having an inner plate (112), an outer plate (106) and a coupling (114a, 114b) between the inner plate (112) and the outer plate (106);
whereby the inner plate (112) responds with a first resonant motion at the first frequency, and the outer plate (106) responds with a second non-resonant motion at the second frequency.

14. The method of claim 13, wherein the first resonant motion is a rotation of the inner plate (112) around a first axis (116).

15. The method of claim 14, wherein the first frequency is not a resonance frequency of the MEMS scanner (102) in a second axis (110).

16. The method of claim 15, wherein the second frequency is a frame rate.

17. The method of claim 16, wherein the step of generating the single drive signal (610) includes generating a ramp waveform (608) at the second frequency.

18. The method of claim 14, wherein the second frequency is not a resonance frequency of the MEMS scanner (102) in a second axis (110).

19. The method of claim 13, further comprising the step of receiving a position signal from the MEMS scanner (102).

20. The method of claim 19, further comprising the step of modifying the single drive signal (610) to achieve a desired motion in at least one axis (110, 116).

21. The method of claim 13, wherein the MEMS scanner (102) is an electromagnetic beam director.

22. The method of claim 21, wherein the MEMS scanner (102) is an electromagnetic beam deflector.

23. The method of claim 13, wherein the single drive signal (610) includes multiplexed first and second frequencies.

## Patentansprüche

1. MEMS-Vorrichtung (102), aufweisend:
eine innere Platte (112), die einen Hauptschwingungsmodus bei einer ersten Frequenz aufweist;
eine äußere Platte (106), die einen sekundären Schwingungsmodus bei der ersten Frequenz aufweist;
eine Kopplungseinrichtung (114a, 114b) zwischen der inneren Platte (112) und der äußeren Platte (106), die gewählt ist, um den die erste Frequenz aufweisenden sekundären Schwingungsmodus der äußeren Platte (106) mit dem die erste Frequenz aufweisenden Hauptschwingungsmodus der inneren Platte (112) zu koppeln; und
eine Betätigungseinrichtung (118, 120), die durch ein einzelnes Ansteuersignal (610) angesteuert wird, wobei die Betätigungseinrichtung (118, 120) betrieben werden kann, um die sekundäre Schwingungsantwort in der äußeren Platte (106) bei der ersten Frequenz hervorzurufen, und weiter betrieben werden kann, um die äußere Platte (106) in nicht-resonanter Weise bei einer zweiten Frequenz anzutreiben, die von der ersten Frequenz verschieden ist;
einen Signalgenerator;
**dadurch gekennzeichnet, dass** der Signalgenerator ausgebildet ist, um das einzelne Ansteuersignal (610) als eine Kombination aus einem die erste Frequenz aufweisenden resonanten Signal (602) und einem die zweite Frequenz aufweisenden nicht-resonanten Signal (608) zu liefern.

2. MEMS-Vorrichtung (102) nach Anspruch 1, wobei der Hauptschwingungsmodus der inneren Platte (112) eine Rotation um eine Achse (116) beinhaltet, die durch die Kopplungseinrichtung (114a, 114b) definiert ist.

3. MEMS-Vorrichtung (102) nach Anspruch 2, die weiter eine Spiegelfläche (13) auf der inneren Platte (112) beinhaltet.

4. MEMS-Vorrichtung (102) nach Anspruch 2, wobei die äußere Platte (106) eine kardanische Struktur beinhaltet.

5. MEMS-Vorrichtung (102) nach Anspruch 2, wobei die äußere Platte (106) eine Ankerstruktur beinhaltet.

6. MEMS-Vorrichtung (102) nach Anspruch 1, wobei die Kopplungseinrichtung (114a, 114b) einen Stab beinhaltet.

7. MEMS-Vorrichtung (102) nach Anspruch 1, wobei die Kopplungseinrichtung (114a, 114b) ein Biegestück beinhaltet.

8. MEMS-Vorrichtung (102) nach Anspruch 1, wobei die Kopplungseinrichtung (114a, 114b) mindestens einen Torsionsarm beinhaltet.

9. MEMS-Vorrichtung (102) nach Anspruch 1, wobei die Kopplungseinrichtung (114a, 114b) eine Aufhängung (402a, 402b, 404a, 404b) beinhaltet, um die gekoppelte, die erste Frequenz aufweisende Schwingungskraft zu einer Mehrzahl von Orten auf der inneren Platte (112) zu verteilen.

10. MEMS-Vorrichtung (102) nach Anspruch 1, wobei die Betätigungseinrichtung (118, 120) ein Paar von Antriebsspulen beinhaltet, die sowohl auf der inneren Platte (112) als auch der äußeren Platte (106) ausgebildet sind, wobei das Paar von Antriebsspulen an das einzelne Ansteuersignal (610) angeschlossen sind.

11. MEMS-Vorrichtung (102) nach Anspruch 1, wobei die Betätigungseinrichtung (118, 120) eine einzelne Antriebsspule beinhaltet, die auf der inneren Platte (112) ausgebildet ist und an das einzelne Ansteuersignal (610) angeschlossen ist.

12. MEMS-Vorrichtung (102) nach Anspruch 1, wobei die Betätigungseinrichtung (118, 120) eine einzelne Antriebsspule beinhaltet, die auf der äußeren Platte (106) ausgebildet ist und an das einzelne Ansteuersignal (610) angeschlossen ist.

13. Verfahren zum Ansteuern einer MEMS-Abtasteinrichtung (102), welches die Schritte beinhaltet:
Erzeugen eines einzelnen Ansteuersignals (610), das Frequenzanteile auf einer ersten Frequenz und einer zweiten Frequenz beinhaltet; und
Senden des einzelnen Ansteuersignals (610) an eine Betätigungseinrichtung (118, 120) einer MEMS-Abtasteinrichtung, die eine innere Platte (112), eine äußere Platte (106) und eine Kopplungseinrichtung (114a, 114b) zwischen der inneren Platte (112) und der äußeren Platte (106) aufweist;
wodurch die innere Platte (112) mit einer ersten resonanten Bewegung auf der ersten Frequenz antwortet, und die äußere Platte (106) mit einer zweiten nicht-resonanten Bewegung auf der zweiten Frequenz antwortet.

14. Verfahren nach Anspruch 13, wobei die erste resonante Bewegung eine Rotation der inneren Platte (112) um eine erste Achse (116) ist.

15. Verfahren nach Anspruch 14, wobei die erste Frequenz keine Resonanzfrequenz der MEMS-Abtasteinrichtung (102) in einer zweiten Achse (110) ist.

16. Verfahren nach Anspruch 15, wobei die zweite Frequenz eine Bildfrequenz ist.

17. Verfahren nach Anspruch 16, wobei der Schritt eines Erzeugens des einzelnen Ansteuersignals (610) ein Erzeugen einer Sägezahnwellenform (608) auf der zweiten Frequenz beinhaltet.

18. Verfahren nach Anspruch 14, wobei die zweite Frequenz keine Resonanzfrequenz der MEMS-Abtasteinrichtung (102) in einer zweiten Achse (110) ist.

19. Verfahren nach Anspruch 13, das weiter den Schritt beinhaltet, dass ein Positionssignal von der MEMS-Abtasteinrichtung (102) empfangen wird.

20. Verfahren nach Anspruch 19, das weiter den Schritt beinhaltet, dass das einzelne Ansteuersignal (610) modifiziert wird, um eine gewünschte Bewegung in mindestens einer Achse (110, 116) zu erzielen.

21. Verfahren nach Anspruch 13, wobei die MEMS-Abtasteinrichtung (102) eine Richteinrichtung für einen elektromagnetischen Strahl ist.

22. Verfahren nach Anspruch 21, wobei die MEMS-Abtasteinrichtung (102) eine Ablenkeinrichtung für einen elektromagnetischen Strahl ist.

23. Verfahren nach Anspruch 13, wobei das einzelne Ansteuersignal (610) gemultiplexte erste und zweite Frequenzen beinhaltet.

## Revendications

1. Dispositif MEMS (102), comprenant :
une plaque interne (112) ayant un mode oscillatoire principal à une première fréquence ;
une plaque externe (106) ayant un mode oscillatoire secondaire à la première fréquence ;
un couplage (114a, 114b) entre la plaque interne (112) et la plaque externe (106) sélectionné pour coupler le mode oscillatoire secondaire de première fréquence de la plaque externe (106) au mode oscillatoire principal de première fréquence de la plaque interne (112) ; et
un actionneur (118, 120) qui est commandé par un signal de commande unique (610), l'actionneur (118, 120) étant utilisable pour induire la réponse oscillatoire secondaire dans la plaque externe (106) à la première fréquence et étant en outre utilisable pour commander la plaque externe (106) de manière non résonante à une seconde fréquence qui est différente de la première fréquence ;
un générateur de signal ;
**caractérisé en ce que** le générateur de signal est adapté pour délivrer le signal de commande unique (610) sous la forme d'une combinaison d'un signal résonant de première fréquence (602) et d'un signal non résonant de seconde fréquence (608).

2. Dispositif MEMS (102) selon la revendication 1, dans lequel le mode oscillatoire principal de la plaque interne (112) comprend une rotation autour d'un axe (116) défini par le couplage (114a, 114b).

3. Dispositif MEMS (102) selon la revendication 2, comprenant en outre une surface spéculaire (113) sur la plaque interne (112).

4. Dispositif MEMS (102) selon la revendication 2, dans lequel la plaque externe (106) comprend une structure de cardan.

5. Dispositif MEMS (102) selon la revendication 2, dans lequel la plaque externe (106) comprend une structure d'ancre.

6. Dispositif MEMS (102) selon la revendication 1, dans lequel le couplage (114a, 114b) comprend un pivot.

7. Dispositif MEMS (102) selon la revendication 1, dans lequel le couplage (114a, 114b) comprend une flexion par pliage.

8. Dispositif MEMS (102) selon la revendication 1, dans lequel le couplage (114a, 114b) comprend au moins un bras de torsion.

9. Dispositif MEMS (102) selon la revendication 1, dans lequel le couplage (114a, 114b) comprend une suspension (402a, 402b, 404a, 404b) pour distribuer la force oscillatoire de première fréquence couplée à une pluralité d'emplacements sur la plaque interne (112).

10. Dispositif MEMS (102) selon la revendication 1, dans lequel l'actionneur (118, 120) comprend une paire de bobines d'entraînement formées sur à la fois la plaque interne (112) et la plaque externe (106), la paire de bobines d'entraînement étant connectées au signal de commande unique (610).

11. Dispositif MEMS (102) selon la revendication 1, dans lequel l'actionneur (118, 120) comprend une bobine d'entraînement unique formée sur la plaque interne (112) et connectée au signal de commande unique (610).

12. Dispositif MEMS (102) selon la revendication 1, dans lequel l'actionneur (118, 120) comprend une bobine d'entraînement unique formée sur la plaque externe (106) et connectée au signal de commande unique (610).

13. Procédé pour commander un scanner MEMS (102) comprenant les étapes consistant à :
générer un signal de commande unique (610) qui comprend des composantes de fréquence à une première fréquence et à une seconde fréquence ; et
transmettre le signal de commande unique (610) à un actionneur (118, 120) d'un scanner MEMS ayant une plaque interne (112), une plaque externe (106) et un couplage (114a, 114b) entre la plaque interne (112) et la plaque externe (106) ;
dans lequel la plaque interne (112) répond avec un premier mouvement de résonance à la première fréquence, et la plaque externe (106) répond avec un second mouvement non résonant à la seconde fréquence.

14. Procédé selon la revendication 13, dans lequel le premier mouvement résonant est une rotation de la plaque interne (112) autour d'un premier axe (116).

15. Procédé selon la revendication 14, dans lequel la première fréquence n'est pas une fréquence de résonance du scanner MEMS (102) suivant un second axe (110).

16. Procédé selon la revendication 15, dans lequel la seconde fréquence est un taux de trame.

17. Procédé selon la revendication 16, dans lequel l'étape consistant à générer le signal de commande unique (610) comprend la génération d'une forme d'onde rampée (608) à la seconde fréquence.

18. Procédé selon la revendication 14, dans lequel la seconde fréquence n'est pas une fréquence de résonance du scanner MEMS (102) suivant un second axe (110).

19. Procédé selon la revendication 13, comprenant en outre l'étape consistant à recevoir un signal de position du scanner MEMS (102).

20. Procédé selon la revendication 19, comprenant en outre l'étape consistant à modifier le signal de commande unique (610) pour obtenir un mouvement souhaité suivant au moins un axe (110, 116).

21. Procédé selon la revendication 13, dans lequel le scanner MEMS (102) est un élément directeur de faisceau électromagnétique.

22. Procédé selon la revendication 21, dans lequel le scanner MEMS (102) est un élément déflecteur de faisceau électromagnétique.

23. Procédé selon la revendication 13, dans lequel le signal de commande unique (610) comprend des premières et secondes fréquences multiplexées.
